(19) Europäisches Patentamt
European Patent Office
Office européen des brevets

(11) EP 2 236 567 A1

(12) **EUROPEAN PATENT APPLICATION**

(43) Date of publication:
**06.10.2010 Bulletin 2010/40**

(21) Application number: **10158382.1**

(22) Date of filing: **30.03.2010**

(51) Int Cl.:
***C09D 11/00*** *(2006.01)* ***C09D 11/10*** *(2006.01)*
***C09D 17/00*** *(2006.01)*

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: **31.03.2009 JP 2009084651**

(71) Applicant: **Fujifilm Corporation**
**Minato-ku**
**Tokyo 106-8620 (JP)**

(72) Inventors:
- **Saito, Ryo**
  **Ashigarakami-gun Kanagawa 258-8577 (JP)**
- **Sano, Satoshi**
  **Ashigarakami-gun Kanagawa 258-8577 (JP)**
- **Ishiji, Yohei**
  **Fujinomiya-shi Shizuoka 418-8666 (JP)**

(74) Representative: **Grünecker, Kinkeldey, Stockmair & Schwanhäusser**
**Anwaltssozietät**
**Leopoldstrasse 4**
**80802 München (DE)**

# (54) Dispersion containing water-insoluble colorant and production method thereof

(57) A water-insoluble colorant dispersion, containing water; a polymer having at least one repeating unit selected from the group of repeating units represented by the following formula (1) or (2); and water-insoluble colorant particles, each of the particles containing at least two kinds of pigments;

Formula (1)

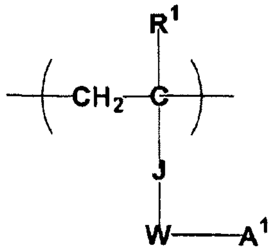

Formula (2)

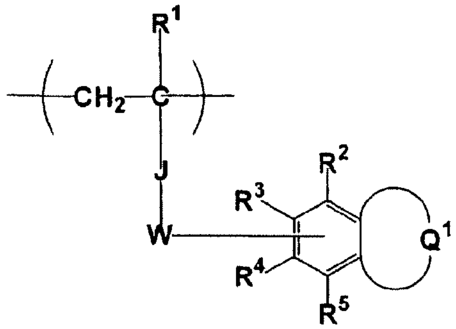

wherein, $R^1$ represents a hydrogen atom or a substituent; any one of $R^2$ to $R^5$ represents a single bond to bind to W, and the others each independently represent a hydrogen atom or a substituent; J represents -CO-, -COO-, -CONR$^{10}$-, -OCO-, or a methylene group, a phenylene group, or -$C_6H_4$CO-; $R^{10}$ represents a hydrogen atom, an alkyl group, an aryl group, or an aralkyl group; W represents a single bond or a divalent linking group; $A^1$ represents a heterocyclic group; $Q^1$ represents a group of atoms which is necessary for forming a ring together with a carbon atom.

EP 2 236 567 A1

## Fig. 1

| Ink Compo-sition | Initial (fresh) | After a lapse of 14 days at 60°C | Remarks |
|---|---|---|---|
| A2 | 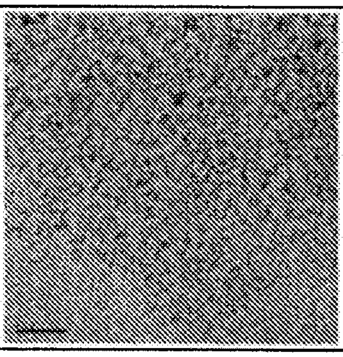 | 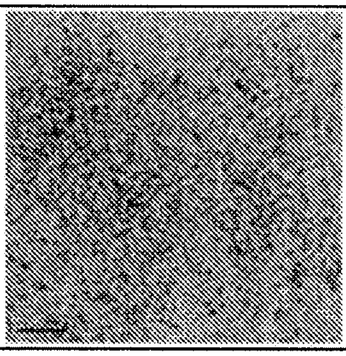 | This invention |
| H2 | 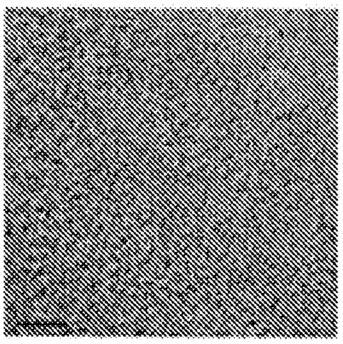 | 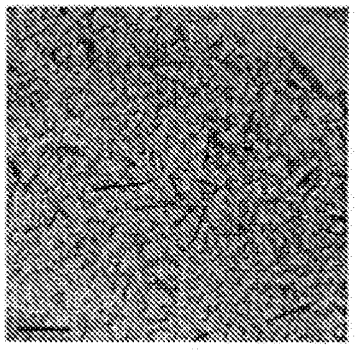 | Comparative example |

## Description

### FIELD OF THE INVENTION

The present invention relates to a dispersion of containing a water-insoluble colorant and a production method of the dispersion, and a recording liquid, ink set, printed article (printed matter), image-forming method and image-forming apparatus using the dispersion.

### BACKGROUND OF THE INVENTION

It is generally preferable that a dispersion is in a state where particles are stably dispersed and remain floating or suspended in liquid without aggregating together. Attaining such a preferable dispersion state is an important target of research and development in current industries. Adjustment and control of particle dispersion state is under study in various fields such as inorganic particles (e.g., magnetic materials), cosmetics, pigments, and foods. If a desired dispersion state is stabilized, for example, to maintain the stabilized dispersion state under the increased particle concentration, improved efficiency and productivity of production processes can be attained by using a concentrated liquid without performance deterioration. Further, in the field of coloring, colorants which can give deeply-, uniformly-, and brilliantly-colored dyed products can be attained by virtue of the concentrated liquid, and thus such colorants will bring about considerable commercial values. Properties of particles are generally better when the particle diameter (particle size) is smaller, and there is hence a strong demand for stable dispersions containing particles having a diameter of sub-microns or of nanometers.

According to an inkjet recording method, high speed recording can be performed with a high freedom degree of forming imaging pattern and with a low noise at the time of recording. Further, image recording can be performed in a short period of time and at low cost. Still further, the inkjet recording method has advantages such that color recording can be readily performed. Therefore, recently the inkjet recording method is rapidly spreading and further developing. As a recording liquid for the method, hitherto a dye ink, in which a water-soluble dye is dissolved in an aqueous medium, has been widely used. However, the dye ink is poor in water resistance and weather resistance of the resultant printed article. Therefore, studies of the dye ink have been made to improve such disadvantages.

A pigment ink is ordinarily obtained by dispersing a water-insoluble pigment in an aqueous medium. It is general to use a method (so-called "break-down method") which includes adding a pigment together with one or plurality of dispersants such as various kinds of surfactants or water-soluble polymers to an aqueous solvent, and pulverizing them using a dispersing machine such as a sand mill, a bead mill, or a ball mill, to make the diameter of the pigment particle small to fine. However, auxiliary absorption of light occurs on the short wavelength (high energy) side, and the color sometimes changes with an increase in the concentration of ink in printed articles.

In contrast, dispersions formed by a build-up method of generating pigments and the like in liquid phase are also under development. For example, a method for preparing a pigment dispersion liquid (hereinafter sometimes referred to as "build-up method") by dissolving an organic pigment together with a polymer dispersant or a polymer compound as a dispersant in an aprotic organic solvent in the presence of alkali, and then mixing the resultant liquid with water, is disclosed (see JP-A-2004-43776 ("JP-A" means unexamined published Japanese patent application)). However, the stability in the case where an ink is prepared by adding a water-soluble organic solvent to a dispersion liquid cannot be sufficient, and further amelioration and development is desired.

Recently, application of a printing method of inkjet type has been studied in the field of industrial printing including relief printing, flat plate printing, gravure printing and offset printing. So-called "print samples" such as Japan Color have been used as the standard of print colors in the field, and inks reproducing colors similar to their color tones have being developed (see, for example, Japanese Patent No. 4152820). In addition, studies, on inkjet recording ink, aimed at improving print density and expanding color-reproducing region on a printed article have been conducted (see, for example, JP-A-2004-2715, JP-A-2004-231692, JP-A-2007-186697 and JP-A-2006-274020).

On the other hand, in the case of an aqueous inkjet printing, paper after ink ejection may be curled, when printing a figure demanding a large amount of ink such as full-color photograph. The reason for curling is considered because hydrogen bonds of cellulose, a component of the carrier paper which serves as the support, are cleaved by penetration of the ink solvent into the paper and then re-bind in random states when dried (see, for example, Hirotaka Iijima, Kenichi Okubo, and Kunitsuna Sasaki, "Konica Minolta Technology Report" Vol.4 (2007)). Proposed for prevention of such paper curling is a method of using an ink having a high Log P value, i.e., a highly hydrophobic organic solvent (such as triethylene glycol monobutylether), replacing a conventional highly hydrophilic glycerol having a small Log P value (see, for example, Hirotaka Iijima, Kenichi Okubo, and Kunitsuna Sasaki, "Konica Minolta Technology Report" Vol.4 (2007)). However, in an ink containing a hydrophobic organic solvent, dispersion stability of the pigment particles (resistance to increase in viscosity or particle diameter over time) may be significantly deteriorated over time. In connection with such a problem, JP-A-2007-9117 discloses an ink composition having its dispersion stability having been improved

by using a specific dispersant.

SUMMARY OF THE INVENTION

The present invention resides in a water-insoluble colorant dispersion, comprising:

water;
a polymer having at least one repeating unit selected from the group of repeating units represented by the following formula (1) or (2); and
water-insoluble colorant particles, each of the particles containing at least two kinds of pigments;

Formula (1)

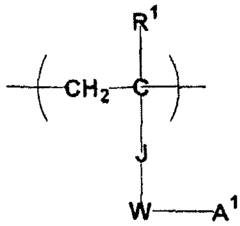

Formula (2)

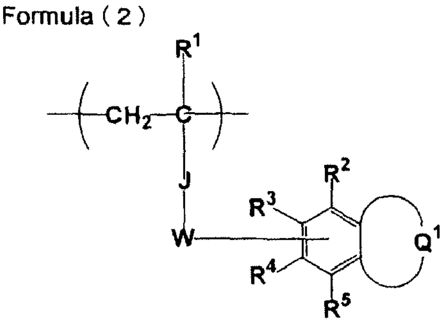

wherein, $R^1$ represents a hydrogen atom or a substituent; any one of $R^2$ to $R^5$ represents a single bond to bind to W, and the others each independently represent a hydrogen atom or a substituent; J represents -CO-, -COO-, -CONR$^{10}$-, -OCO-, or a methylene group, a phenylene group, or $-C_6H_4CO-$; $R^{10}$ represents a hydrogen atom, an alkyl group, an aryl group, or an aralkyl group; W represents a single bond or a divalent linking group; $A^1$ represents a heterocyclic group; $Q^1$ represents a group of atoms which is necessary for forming a ring together with a carbon atom.

Further, the present invention resides in a method of producing a dispersion, comprising the steps of:

dissolving at least two kinds of water-insoluble colorants, a polymer, and a base into an aprotic water-soluble organic solvent, the polymer including at least repeating units of the following A and B as a hydrophilic portion,
A: a repeating unit of having an acid group selected from the group of a carboxylic acid group, a sulfonic acid group, a hydroxyl group, and a phosphoric acid group,
B: a repeating unit selected from the group of repeating units represented by the following formula (1) or (2); and
bringing the solution prepared in the prescribed step into contact with an aqueous medium so as to form water-insoluble colorant fine particles.

Formula (1)

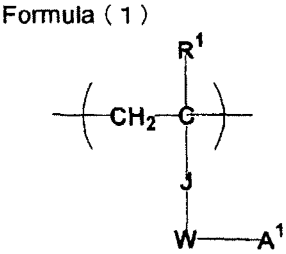

Formula (2)

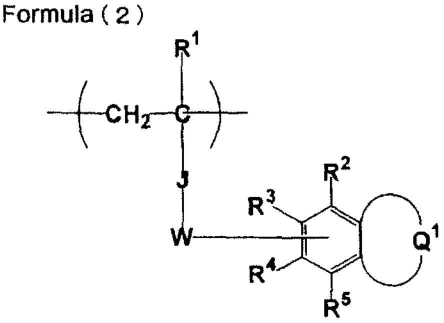

wherein, $R^1$ represents a hydrogen atom or a substituent; any one of $R^2$ to $R^5$ represents a single bond to bind to W, and the others each independently represent a hydrogen atom or a substituent; J represents -CO-, -COO-, -CONR$^{10}$-, -OCO-, or a methylene group, a phenylene group, or $-C_6H_4CO-$; $R^{10}$ represents a hydrogen atom, an alkyl group, an aryl group, or an aralkyl group; W represents a single bond or a divalent linking group; $A^1$ represents

a heterocyclic group; $Q^1$ represents a group of atoms which is necessary for forming a ring together with a carbon atom.

BRIEF DESCRIPTION OF THE DRAWINGS

Fig. 1 shows the results of the observations of the ink composition in Example 3 by a transmission electron microscope (TEM).
Fig. 2 shows the spectra of the light absorption spectra of the ink composition in Example 4

DETAILED DESCRIPTION OF THE INVENTION

The inventors of the present invention devotedly repeated investigations, and as a result, they found that a water-insoluble colorant dispersion having excellent stability over time can be provided by dispersing at least two kinds of pigments (water-insoluble colorants) in water using a specific dispersant, as compared with the case where one kind of pigment is used alone. The present invention was made based on this finding.
According to the present invention, there are provided the following means:

(1) A water-insoluble colorant dispersion, comprising:

water;
a polymer having at least one repeating unit selected from the group of repeating units represented by the following formula (1) or (2); and
water-insoluble colorant particles, each of the particles containing at least two kinds of pigments;

Formula (1)

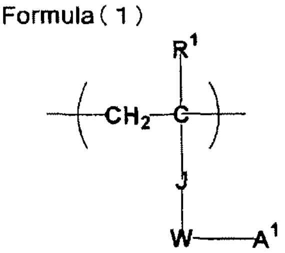

Formula (2)

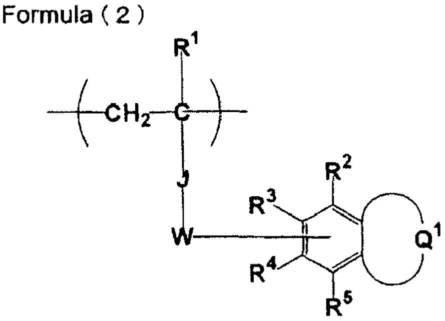

wherein, $R^1$ represents a hydrogen atom or a substituent; any one of $R^2$ to $R^5$ represents a single bond to bind to W, and the others each independently represent a hydrogen atom or a substituent; J represents -CO-, -COO-, -CONR$^{10}$-, -OCO-, or a methylene group, a phenylene group, or $-C_6H_4CO-$; $R^{10}$ represents a hydrogen atom, an alkyl group, an aryl group, or an aralkyl group; W represents a single bond or a divalent linking group; $A^1$ represents a heterocyclic group; $Q^1$ represents a group of atoms which is necessary for forming a ring together with a carbon atom.
(2) The water-insoluble colorant dispersion as described in the above item (1), wherein the polymer further has a constitutional unit having at least one acid group as a hydrophilic portion.
(3) The water-insoluble colorant dispersion as described in the above item (2), wherein the acid group is selected from the group of a carboxylic acid group, a sulfonic acid group, a hydroxyl group, and a phosphoric acid group.
(4) The water-insoluble colorant dispersion as described in any one of the above items (1) to (3), wherein the water-insoluble colorant particle is a solid solution of containing the at least two kinds of pigments.
(5) The water-insoluble colorant dispersion as described in any one of the above items (1) to (4), wherein the water-insoluble colorant particle has a crystalline structure.
(6) The water-insoluble colorant dispersion as described in any one of the above items (1) to (5), wherein the average particle diameter of the water-insoluble colorant particle is 5 to 100 nm.
(7) The water-insoluble colorant dispersion as described in any one of the above items (1) to (6), wherein the water-insoluble colorant particle is an organic pigment selected from the group consisting of quinacridone organic pigments, diketopyrrolopyrrole organic pigments, mono azo yellow organic pigments, condensed azo organic pigments, quinophthalone organic pigments, benzimidazolone organic pigments, and disazo yellow organic pigments.

(8) The water-insoluble colorant dispersion as described in any one of the above items (1) to (7), wherein the water-insoluble colorant particle is a solid solution pigment containing two or more kinds of quinacridone compounds selected from the group consisting of unsubstituted quinacridone, 2,9-dimethylquinacridone, 2,9-dichloroquinacridone and 3,10-dichloroquinacridone.

(9) The water-insoluble colorant dispersion as described in any one of the above items (1) to (8), wherein the repeating unit represented by the formula (2) is a repeating unit represented by the following formula (3):

Formula ( 3 )

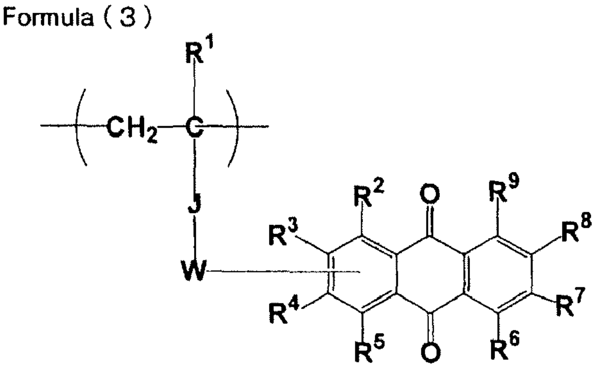

wherein, $R^1$ represents a hydrogen atom or a substituent; any one of $R^2$ to $R^5$ represents a single bond to bind to W, and the others each independently represent a hydrogen atom or a substituent; J represents -CO-, -COO-, $-CONR^{10}-$, -OCO-, or a methylene group, a phenylene group, or $-C_6H_4CO-$; $R^{10}$ represents a hydrogen atom, an alkyl group, an aryl group, or an aralkyl group; W represents a single bond or a divalent linking group; $R^6$ to $R^9$ each independently represents a hydrogen atom or a substituent.

(10) A recording liquid produced by the water-insoluble colorant dispersion as described in any one of the above items (1) to (9), comprising the water-insoluble colorant particles in an ink medium in an amount of 0.1 to 20 mass % with regard to the total mass weight of the recoding liquid.

(11) A recording liquid particularly suitable for use in an inkjet, comprising the recoding liquid as described in the above item (10).

(12) A method of producing a dispersion, comprising the steps of:

dissolving at least two kinds of water-insoluble colorants, a polymer, and a base into an aprotic water-soluble organic solvent, the polymer including at least repeating units of the following A and B as a hydrophilic portion,
A: a repeating unit of having an acid group selected from the group of a carboxylic acid group, a sulfonic acid group, a hydroxyl group, and a phosphoric acid group,
B: a repeating unit selected from the group of repeating units represented by the following formula (1) or (2); and bringing the solution prepared in the prescribed step into contact with an aqueous medium so as to form water-insoluble colorant fine particles.

Formula ( 1 )

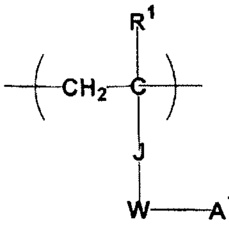

Formula ( 2 )

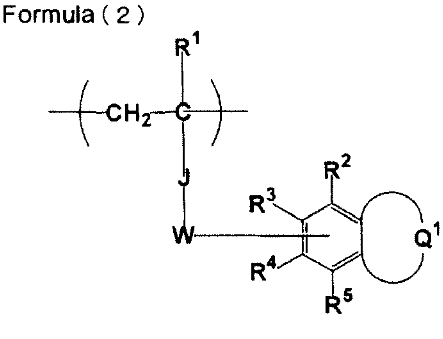

wherein, $R^1$ represents a hydrogen atom or a substituent; any one of $R^2$ to $R^5$ represents a single bond to bind to W, and the others each independently represent a hydrogen atom or a substituent; J represents -CO-, -COO-,

$-CONR^{10}-$, -OCO-, or a methylene group, a phenylene group, or $-C_6H_4CO-$; $R^{10}$ represents a hydrogen atom, an alkyl group, an aryl group, or an aralkyl group; W represents a single bond or a divalent linking group; $A^1$ represents a heterocyclic group; $Q^1$ represents a group of atoms which is necessary for forming a ring together with a carbon atom.

(13) The method of producing a dispersion as described in the above item (12), further comprising a step of heat-treating the dispersion.
(14) A water-insoluble colorant dispersion, obtained by the producing method as described in (12) or (13).
(15) A recording liquid produced by using the dispersion containing a water-insoluble colorant as described in (14).

The present invention is explained in detail below.
The water-insoluble colorant dispersion according to the present invention contains a water-insoluble colorant containing at least two kinds of colorant, a polymer compound having at least one repeating unit selected from the repeating units represented by formula (1) or (2) and additionally water. The water-insoluble colorant dispersion of the present invention is excellent both in dispersion stability and color reproducibility.

Formula ( 1 )

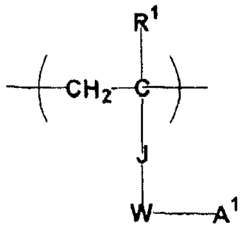

Formula ( 2 )

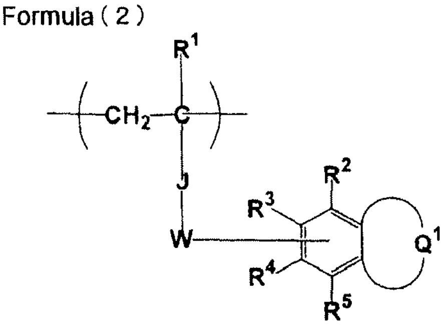

In formula (1) or (2), $R^1$ represents a hydrogen atom or a substituent; any one of $R^2$ to $R^5$ represents a single bond which binds to W, the others each independently represents a hydrogen atom or a substituent; J represents -CO-, -COO-, $-CONR^{10}-$, - OCO-, a methylene group, a phenylene group or $-C_6H_4CO-$; $R^{10}$ represents a hydrogen atom, an alkyl group, an aryl group, or an aralkyl group; W represents a single bond or a divalent linking group; $A^1$ represents a heterocyclic group; $Q^1$ represents a group of atoms which is necessary for forming a ring together with a carbon atom.
An organic pigment that constitutes the water-insoluble colorant dispersion in the dispersion of the present invention is not limited in hue and structure thereof, and examples include a perylene compound pigment, perynone compound pigment, quinacridone compound pigment, quinacridonequinone compound pigment, anthraquinone compound pigment, anthanthrone compound pigment, benzimidazolone compound pigment, condensed disazo compound pigment, disazo compound pigment, azo compound pigment, indanthrone compound pigment, indanthrene compound pigment, quinophthalone compound pigment, quinoxalinedione compound pigment, metallic complex azo compound pigment, phthalocyanine compound pigment, triaryl carbonium compound pigment, dioxazine compound pigment, aminoanthraquinone compound pigment, diketopyrrolopyrrole compound pigment, naphthol AS compound pigment, thioindigo compound pigment, isoindoline compound pigment, isoindolinone compound pigment, pyranthrone compound pigment or isoviolanthrone compound pigment, or a mixture thereof.
More specifically, examples of the organic pigment include perylene compound pigments, such as C.I. Pigment Red 179, C.I. Pigment Red 190, C.I. Pigment Red 224, and C.I. Pigment Violet 29; perynone compound pigments, such as C.I. Pigment Orange 43, and C.I. Pigment Red 194; quinacridone compound pigments, such as C.I. Pigment Violet 19, C.I. Pigment Violet 42, C.I. Pigment Red 122, C.I. Pigment Red 192, C.I. Pigment Red 202, C.I. Pigment Red 207, and C.I. Pigment Red 209; quinacridonequinone compound pigments, such as C.I. Pigment Red 206, C.I. Pigment Orange 48, and C.I. Pigment Orange 49; anthraquinone compound pigments, such as C.I. Pigment Yellow 147; anthanthrone compound pigments, such as C.I. Pigment Red 168; benzimidazolone compound pigments, such as C.I. Pigment Brown 25, C.I. Pigment Violet 32, C.I. Pigment Yellow 180, C.I. Pigment Yellow 181, C.I. Pigment Orange 36, C.I. Pigment Orange 62, and C.I. Pigment Red 185; condensed disazo compound pigments, such as C.I. Pigment Yellow 93, C.I. Pigment Yellow 94, C.I. Pigment Yellow 95, C.I. Pigment Yellow 128, C.I. Pigment Yellow 166, C.I. Pigment Orange 34, C.I. Pigment Orange 13, C.I. Pigment Orange 31, C.I. Pigment Red 144 (C.I. No. 20735), C.I. Pigment Red 166, C.I. Pigment Yellow 219, C.I. Pigment Red 220, C.I. Pigment Red 221, C.I. Pigment Red 242, C.I. Pigment Red 248, C.I. Pigment Red 262, and C.I. Pigment Brown 23; disazo compound pigments, such as C.I. Pigment Yellow 13, C.I. Pigment Yellow 83, and C.I. Pigment Yellow 188; azo compound pigments, such as C.I. Pigment Red 187, C.I.

Pigment Red 170, C.I. Pigment Yellow 74, C.I. Pigment Red 48, C.I. Pigment Red 53, C.I. Pigment Orange 64, and C.I. Pigment Red 247; indanthrone compound pigments, such as C.I. Pigment Blue 60; indanthrene compound pigments, such as C.I. Pigment Blue 60; quinophthalone compound pigments, such as C.I. Pigment Yellow 138; quinoxalinedione compound pigments, such as C.I. Pigment Yellow 213; metallic complex azo compound pigments, such as C.I. Pigment Yellow 129, and C.I. Pigment Yellow 150; phthalocyanine compound pigments, such as C.I. Pigment Green 7, C.I. Pigment Green 36, C.I. Pigment Green 37, C.I. Pigment Blue 16, C.I. Pigment Blue 75, and C.I. Pigment Blue 15 (including 15:1, 15:6, others); triaryl carbonium compound pigments, such as C.I. Pigment Blue 56, and C.I. Pigment Blue 61; dioxazine compound pigments, such as C.I. Pigment Violet 23, and C.I. Pigment Violet 37; aminoanthraquinone compound pigments, such as C.I. Pigment Red 177; diketopyrrolopyrrole compound pigments, such as C.I. Pigment Red 254, C.I. Pigment Red 255, C.I. Pigment Red 264, C.I. Pigment Red 272, C.I. Pigment Orange 71, and C.I. Pigment Orange 73; naphthol AS compound pigments, such as C.I. Pigment Red 187, and C.I. Pigment Red 170; thioindigo compound pigments, such as C.I. Pigment Red 88; isoindoline compound pigments, such as C.I. Pigment Yellow 139, C.I. Pigment Orange 66; isoindolinone compound pigments, such as C.I. Pigment Yellow 109, C.I. Pigment Yellow 110, and C.I. Pigment Orange 61; pyranthrone compound pigments, such as C.I. Pigment Orange 40, and C.I. Pigment Red 216; and isoviolanthrone compound pigments, such as C.I. Pigment Violet 31.

The water-insoluble colorant in the dispersion of the present invention is preferably an organic pigment selected from the group consisting of quinacridone compound pigments, diketopyrrolopyrrole compound pigments, mono azo yellow compound pigments, condensed azo compound pigments, quinophthalone compound pigments, benzimidazolone compound pigments, and disazo yellow compound pigments.

In the dispersion of the present invention, the water-insoluble colorant contains two or more kinds of organic pigment components. For example, C.I. Pigment Red 122 and C.I. Pigment Violet 19 are both quinacridone-based pigments, and have a feature that formation of mixed crystals (formation of solid solution) occurs, when these pigments are used in combination, so that the resulting color is different from the colors represented by the respective pigments individually, and a color density increases (high color development). The inventors of the present invention found that when such a water-insoluble colorant containing two or more kinds of organic pigment components is used in combination with a polymer compound (dispersant) having a repeating unit represented by formula (1) or (2) that will be described later, the dispersion has a high color density and excellent color reproducibility, and has the stability over time (dispersion stability and performance stability) markedly improved, as compared with the case of using a single pigment in combination with a dispersant alone. When two or more kinds of pigments and a specific dispersant are used in combination, the interaction between the pigment and the adsorbing group of the dispersant can be increased, as compared with the case of using a single pigment. Therefore, dissolution of pigments, particularly in a solvent having a low SP value, can be suppressed, and crystal growth (primary particle growth) of the pigment is suppressed, so that there can be provided a water-insoluble colorant dispersion which has very fine pigment primary particles, high dispersion stability and excellent storage stability, and which can produce a high-precision printed article with a high color density.

A combination of two or more kinds of organic pigment is not particularly limited. However, it is preferred to combine the same type of pigment compounds such as a combination of azo compound pigments, or a combination of diketopyrrolopyrrole compound pigments. In other words, it is preferred to use a combination of organic pigments having a similar skeleton to each other. Specifically, there are preferable combinations such as C.I. pigment violet 19 and C.I. pigment red 122; C.I. pigment violet 19, C.I. pigment red 122 and C.I. pigment red 209; C.I. pigment yellow 128 and C.I. pigment yellow 74; and C.I. pigment yellow 128 and C.I. pigment orange 13. In regard to the formation of solid solution of pigments, reference can be made to, for example, JP-A-60-35055 and the like.

Further, as the at least two kinds of pigment components, it is preferred to use at least another kind of organic pigment that is different by the range of 10 nm to 200 nm, especially from 10 nm to 100 nm from the maximum absorption wavelength (λmax) of one organic pigment of the two or more kinds of organic pigment components. It should be noted that the absorption wavelength of the pigment used in the present invention means a wavelength in a state where particles are formed, namely in the state of particles coated on or incorporated in a medium, but it does not mean a wavelength in the state of solution of the pigment dissolved in a specific medium such as alkali or acid.

The maximum absorption wavelength (λmax) of a primary organic pigment component is not particularly limited. However, it is practical in a coloring application to use organic pigment compounds having the maximum absorption wavelength within the visible light region. For example, it is preferred to use an organic pigment compound having the maximum absorption wavelength in the range of 300 nm to 750 nm.

In addition, the water-insoluble colorant used in the dispersion according to the present invention is preferably a solid solution pigment containing two or more kinds of quinacridone compounds selected from the group consisting of unsubstituted quinacridone, 2,9-dimethylquinacridone, 2,9-dichloroquinacridone and 3,10-dichloroquinacridone.

The content of the water-insoluble colorant in the dispersion according to the present invention is not particularly limited. In consideration of application to an ink, for example, it is preferably from 0.01% by mass to 30% by mass, more preferably from 1.0% by mass to 20% by mass, and most preferably from 1.1 % by mass to 15% by mass.

In the dispersion of the present invention, even though a concentration of the dispersion is high, the change

in color is small and the viscosity of the dispersion can be kept at low level. For example, when the dispersion is used as a recording liquid, the freedom degree of the kind and addition amount of additives that can be used in the recording liquid is increased. Accordingly, the dispersion according to the present invention can be used favorably in the above range as a recording liquid.

Further, with respect to the at least two kinds of organic pigment components contained in the particles of the water-insoluble colorant dispersion, the content of each pigment in the mixture of the two or more kinds of pigments is not particularly limited, but the mass ratio of the two pigments is preferably 0.5:9.5 to 9.5:0.5, more preferably 1:9 to 9:1, and still more preferably 2:8 to 8:2, for obtaining a color in a color gamut different from that of a single kind of pigment. Although it is possible to prepare the dispersion at a ratio outside the range of 0.5:9.5 to 9.5:0.5, the color obtained becomes almost the same as the color exhibited by the single kind of pigment. If three kinds of pigments are used, each pigment is preferably contained in an amount of 5 to 90 mass %, more preferably 10 to 80 mass %, with respect to the total amount of the pigments.

The average particle diameter of the water-insoluble colorant dispersion contained in the dispersion of the present invention, as determined by dynamic light-scattering method that is explained later, is preferably 5 to 100 nm from the viewpoint of high color-developing efficiency when the dispersion is used as a recording liquid and the like, more preferably 5 to 50 nm from the viewpoint of improvement in transparency, and particularly preferably 5 to 45 nm from the view point of both improvement in ejecting stability and expansion of the color-reproducing region when the dispersion is used as an inkjet recording liquid.

The polymer compound having a repeating unit represented by the formula (1) or (2) (hereinafter referred to as "specific polymer compound") will be explained in detail. This polymer compound can function as a dispersant and/or a surfactant.

In formula (1) or (2), $R^1$ represents a hydrogen atom or a substituent. Any one of $R^2$ to $R^5$ represents a single bond which binds to W. The others each independently represent a hydrogen atom or a substituent.

The substituent includes a monovalent substituent. Examples of the monovalent substituent (hereinafter referred to as "Z") include an alkyl group (preferably an alkyl group having 1 to 30 carbon atoms, more preferably 1 to 20 carbon atoms, and particularly preferably 1 to 10 carbon atoms, e.g., methyl, ethyl, isopropyl, tert-butyl, n-octyl, n-decyl, n-hexadecyl), a cycloalkyl group (preferably a cycloalkyl group having 3 to 30 carbon atoms, more preferably 3 to 20 carbon atoms, and particularly preferably 3 to 10 carbon atoms, e.g., cyclopropyl, cyclopentyl, cyclohexyl), an alkenyl group (preferably an alkenyl group having 2 to 30 carbon atoms, more preferably 2 to 20 carbon atoms, and particularly preferably 2 to 10 carbon atoms, e.g., vinyl, allyl, 2-butenyl, 3-pentenyl), an alkynyl group (preferably an alkynyl group having 2 to 30 carbon atoms, more preferably 2 to 20 carbon atoms, and particularly preferably 2 to 10 carbon atoms, e.g., propargyl, 3-pentynyl), an aryl group (preferably an aryl group having 6 to 30 carbon atoms, more preferably 6 to 20 carbon atoms, and particularly preferably 6 to 12 carbon atoms, e.g., phenyl, p-methylphenyl, naphthyl, anthranyl), an amino group (preferably an amino group having 0 to 30 carbon atoms, more preferably 0 to 20 carbon atoms, and particularly preferably 0 to 10 carbon atoms, e.g., amino, methylamino, dimethylamino, diethylamino, dibenzylamino, diphenylamino, ditolylamino), an alkoxy group (preferably an alkoxy group having 1 to 30 carbon atoms, more preferably 1 to 20 carbon atoms, and particularly preferably 1 to 10 carbon atoms, e.g., methoxy, ethoxy, butoxy, 2-ethylhexyloxy), an aryloxy group (preferably an aryloxy group having 6 to 30 carbon atoms, more preferably 6 to 20 carbon atoms, and particularly preferably 6 to 12 carbon atoms, e.g., phenyloxy, 1-naphthyloxy, 2-naphthyloxy), a heterocyclicoxy group (preferably a heterocyclicoxy group having 1 to 30 carbon atoms, more preferably 1 to 20 carbon atoms, and particularly preferably 1 to 12 carbon atoms, e.g., pyridyloxy, pyrazyloxy, pyrimidyloxy, quinolyloxy), an acyl group (preferably an acyl group having 1 to 30 carbon atoms, more preferably 1 to 20 carbon atoms, and particularly preferably 1 to 12 carbon atoms, e.g., acetyl, benzoyl, formyl, pivaloyl), an alkoxycarbonyl group (preferably an alkoxycarbonyl group having 2 to 30 carbon atoms, more preferably 2 to 20 carbon atoms, and particularly preferably 2 to 12 carbon atoms, e.g., methoxycarbonyl, ethoxycarbonyl), an aryloxycarbonyl group (preferably an aryloxycarbonyl group having 7 to 30 carbon atoms, more preferably 7 to 20 carbon atoms, and particularly preferably 7 to 12 carbon atoms, e.g., phenyloxycarbonyl), an acyloxy group (preferably an acyloxy group having 2 to 30 carbon atoms, more preferably 2 to 20 carbon atoms, and particularly preferably 2 to 10 carbon atoms, e.g., acetoxy, benzoyloxy), an acylamino group (preferably an acylamino group having 2 to 30 carbon atoms, more preferably 2 to 20 carbon atoms, and particularly preferably 2 to 10 carbon atoms, e.g., acetylamino, benzoylamino), an alkoxycarbonylamino group (preferably an alkoxycarbonylamino group having 2 to 30 carbon atoms, more preferably 2 to 20 carbon atoms, and particularly preferably 2 to 12 carbon atoms, e.g., methoxycarbonylamino), an aryloxycarbonylamino group (preferably an aryloxycarbonylamino group having 7 to 30 carbon atoms, more preferably 7 to 20 carbon atoms, and particularly preferably 7 to 12 carbon atoms, e.g., phenyloxycarbonylamino), a sulfonylamino group (preferably a sulfonylamino group having 1 to 30 carbon atoms, more preferably 1 to 20 carbon atoms, and particularly preferably 1 to 12 carbon atoms, e.g., methanesulfonylamino, benzenesulfonylamino), a sulfamoyl group (preferably a sulfamoyl group having 0 to 30 carbon atoms, more preferably 0 to 20 carbon atoms, and particularly preferably 0 to 12 carbon atoms, e.g., sulfamoyl, methylsulfamoyl, dimethylsulfamoyl, phenylsulfamoyl), a carbamoyl group (preferably a carbamoyl group having 1 to 30 carbon atoms, more preferably 1 to

20 carbon atoms, and particularly preferably 1 to 12 carbon atoms, e.g., carbamoyl, methylcarbamoyl, diethylcarbamoyl, phenylcarbamoyl), an alkylthio group (preferably an alkylthio group having 1 to 30 carbon atoms, more preferably 1 to 20 carbon atoms, and particularly preferably 1 to 12 carbon atoms, e.g., methylthio, ethylthio), an arylthio group (preferably an arylthio group having 6 to 30 carbon atoms, more preferably 6 to 20 carbon atoms, and particularly preferably 6 to 12 carbon atoms, e.g., phenylthio), a heterocyclicthio group (preferably a heterocyclicthio group having 1 to 30 carbon atoms, more preferably 1 to 20 carbon atoms, and particularly preferably 1 to 12 carbon atoms, e.g., pyridylthio, 2-benzimidazolylthio, 2-benzoxazolylthio, 2-benzothiazolylthio), a sulfonyl group (preferably a sulfonyl group having 1 to 30 carbon atoms, more preferably 1 to 20 carbon atoms, and particularly preferably 1 to 12 carbon atoms, e.g., mesyl, tosyl), a sulfinyl group (preferably a sulfinyl group having 1 to 30 carbon atoms, more preferably 1 to 20 carbon atoms, and particularly preferably 1 to 12 carbon atoms, e.g., methanesulfinyl, benzenesulfinyl), a ureido group (preferably a ureido group having 1 to 30 carbon atoms, more preferably 1 to 20 carbon atoms, and particularly preferably 1 to 12 carbon atoms, e.g., ureido, methylureido, phenylureido), a phosphoric acid amido group (preferably a phosphoric acid amido group having 1 to 30 carbon atoms, more preferably 1 to 20 carbon atoms, and particularly preferably 1 to 12 carbon atoms, e.g., diethylphosphoric acid amido, phenylphosphoric acid amido), a hydroxyl group, a mercapto group, a halogen atom (e.g., a fluorine atom, a chlorine atom, a bromine atom, an iodine atom; more preferably a fluorine atom), a cyano group, a sulfo group, a carboxyl group, an oxo group, a nitro group, a hydroxamic acid group, a sulfino group, a hydrazino group, an imino group, a heterocyclic group (preferably a heterocyclic group having 1 to 30 carbon atoms, and more preferably 1 to 12 carbon atoms; as hetero atoms, e.g., nitrogen, oxygen, sulfur; and specifically, e.g., imidazolyl, pyridyl, quinolyl, furyl, thienyl, piperidyl, morpholino, benzoxazolyl, benzimidazolyl, benzothiazolyl, carbazolyl, azepinyl), a silyl group (preferably a silyl group having 3 to 40 carbon atoms, more preferably 3 to 30 carbon atoms, and particularly preferably 3 to 24 carbon atoms, e.g., trimethylsilyl, triphenylsilyl), and a silyloxy group (preferably a silyloxy group having 3 to 40 carbon atoms, more preferably 3 to 30 carbon atoms, and particularly preferably 3 to 24 carbon atoms, e.g., trimethylsilyloxy, triphenylsilyloxy). These substituents may be further substituted by at least one selected from the substituent Z.

$R^1$ preferably represents a hydrogen atom, an alkyl group, or an aryl group, more preferably a hydrogen atom or an alkyl group.

Each of the groups $R^2$ to $R^5$, when it is not a single bond binding to W, is preferably a hydrogen atom, an alkyl group, an aryl group, an amino group, an alkoxy group, an aryloxy group, an acyl group, an alkoxycarbonyl group, an aryloxycarbonyl group, an acyloxy group, an acylamino group, an alkoxycarbonylamino group, an aryloxycarbonylamino group, a sulfonylamino group, a carbamoyl group, a sulfonyl group, a hydroxy group, a halogen atom, a cyano group, a carboxyl group, a nitro group, or a heterocyclic group; it is more preferably a hydrogen atom, an alkyl group, an aryl group, an amino group, an alkoxy group, an aryloxy group, an acyl group, an acylamino group, a sulfonylamino group, a carbamoyl group, a sulfonyl group, a hydroxy group, a halogen atom, or a cyano group; and it is still more preferably a hydrogen atom, an acyl group, a hydroxy group, a halogen atom, or a cyano group.

In formula (1) or (2), J represents -CO-, -COO-, $-CONR^{10}-$, -OCO-, a methylene group, a phenylene group, or $-C_6H_4CO-$. Among them, J preferably represents -CO-, $-CONR^{10}-$, a phenylene group, or $-C_6H_4CO-$, more preferably $-C_6H_4CO-$. $R^{10}$ represents a hydrogen atom, an alkyl group, an aryl group, an aralkyl group, or $-CONR^{10}-$, more preferably a hydrogen atom, an alkyl group, an aryl group, or $-CONR^{10}-$, and the preferable range thereof is the same as those of the alkyl group, the aryl group and $-CONR^{10}-$ explained in the substituent Z.

In formula (1) or (2), W represents a single bond or a divalent linking group. Examples of the divalent linking group include an imino group, a straight-chain, branched or cyclic alkylene group (preferably an alkylene group having 1 to 30 carbon atoms, more preferably 1 to 12 carbon atoms, and further preferably 1 to 4 carbon atoms, e.g., methylene, ethylene, propylene, butylene, pentylene, hexylene, octylene, and decylene), an aralkylene group (preferably an aralkylene group having 7 to 30 carbon atoms, and more preferably 7 to 13 carbon atoms, e.g., benzylidene and cinnamylidene), an arylene group (preferably an arylene group having 6 to 30 carbon atoms, and more preferably 6 to 15 carbon atoms, e.g., phenylene, cumenylene, mesitylene, tolylene and xylylene), $-(CR^{11}R^{12})nNHCONH-$, and $-(CR^{11}R^{12})_nCONH-$ ($R^{11}$ and $R^{12}$ each independently represent a hydrogen atom or a substituent, preferably a hydrogen atom, an alkyl group, a halogen atom, or a hydroxyl group, more preferably a hydrogen atom or an alkyl group, furthermore preferably a hydrogen atom. $R^{11}$s and $R^{12}$s may be the same or different from each other. n represents a positive integer, and preferably 1 to 10, more preferably 2 to 5. Among them, $-(CR^{11}R^{12})nNHCONH-$, $-(CR^{11}R^{12})nCONH-$, and an imino group are preferable, and an imino group is more preferable.

W preferably represents a single bond, an alkylene group, or an arylene group, more preferably a single bond or an alkylene group, furthermore preferably a single bond.

W may further have a substituent. As the substituent, the monovalent substituent explained in Z is exemplified. W may also be constituted of a combination of a plurality of the divalent linking groups mentioned above. In addition, W favorably has an ether bond therein.

In formula (1), $A^1$ represents a heterocyclic group. The heterocyclic group as used in the present invention means a monovalent radical obtained by removing one hydrogen atom from a heterocyclic compound.

The heterocyclic group represented by $A^1$ is preferably a heterocyclic group that is capable of constituting a colorant (pigment). The presence of the heterocyclic moiety having high affinity to a pigment due to a van der Waals interaction ensures good adsorbing ability with respect to the pigment, making it possible to obtain a stable dispersion.

The heterocyclic compound constituting the heterocyclic group preferably has at least one hydrogen bond group in a molecule. Examples thereof include thiophene, furan, xanthene, pyrrole, imidazole, isoindoline, isoindolinone, benzimidazolone, indole, quinoline, carbazole, acridine, acridone, anthraquinone, phthalimide, quinaldine and quinophthalone. Among these, benzimidazolone, indole, quinoline, carbazole, acridine, acridone, anthraquinone and phthalimide are particularly preferable.

It is particularly preferable that these heterocyclic groups are heterocyclic groups that are similar to the pigment used. Specifically, for quinacridone-based pigments, acridone and the like are particularly suitably used in the present invention.

In formula (2), $Q^1$ represents an atomic group necessary for forming a ring together with carbon atoms (more particularly, two carbon atoms of -C=C-). The atomic group is a ring composed of carbon, nitrogen, oxygen, silicon, phosphorus and/or sulfur, preferably carbon, nitrogen, oxygen, and/or sulfur, more preferably carbon, nitrogen and/or oxygen, and even more preferably carbon and/or nitrogen. $Q^1$ that is constituted of such an atomic group may be saturated or unsaturated, and may also have one or more substituents if $Q^1$ can be substituted. The substituents are the same as the groups explained for the substituent Z.

In formula (2), examples of the ring structure group (a ring structure group formed from an aryl group having $R^2$ to $R^5$ and $Q^1$) that binds to W, include ring structure groups represented by any one of the following formulae (i) to (vi), each of which may be substituted (wherein symbol * means the site for binding to W). Among these, ring structure groups represented by the following formula (i), (ii) or (iii), each of which may be substituted, are preferred, and ring structure group represented by the following formula (i), which may be substituted, is more preferred.

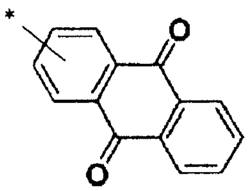
(i)

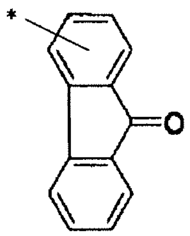
(ii)

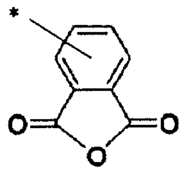
(iii)

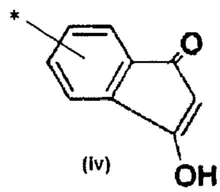
(iv)

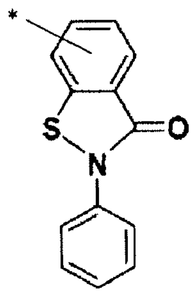
(v)

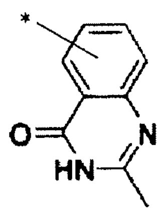
(vi)

The constitutional unit (repeating unit) represented by formula (2) is preferably represented by the following formula (3).

Formula (3)

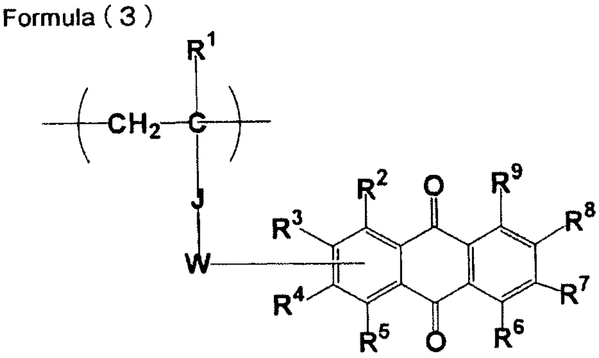

In formula (3), $R^6$ to $R^9$ each independently represents a hydrogen atom or a substituent. $R^1$ to $R^5$, J, and W in formula (3) have the same meanings as $R^1$ to $R^5$, J, and W in formula (2), respectively and the preferable range thereof is the same as those of $R^1$ to $R^5$, J, and W in formula (2), respectively.

When each of $R^6$ to $R^9$ represents a substituent, the monovalent substituent explained in Z is exemplified as the substituent. Each of $R^6$ to $R^9$ is preferably a hydrogen atom, an alkyl group, an aryl group, an amino group, an alkoxy group, an aryloxy group, an acyl group, an alkoxycarbonyl group, an aryloxycarbonyl group, an acyloxy group, an acylamino group, an alkoxycarbonylamino group, an aryloxycarbonylamino group, a sulfonylamino group, a carbamoyl group, a sulfonyl group, a hydroxy group, a halogen atom, a cyano group, a carboxyl group, a nitro group, or a heterocyclic group; more preferably a hydrogen atom, an alkyl group, an aryl group, an amino group, an alkoxy group, an aryloxy group, an acyl group, an acylamino group, a sulfonylamino group, a carbamoyl group, a sulfonyl group, a hydroxy group, a halogen atom, or a cyano group; further more preferably a hydrogen atom, an acyl group, a hydroxy group, a halogen atom, or a cyano group; still further more preferably a hydrogen atom.

As for the repeating units represented by formula (3), the following combinations (a) of substituents are preferable; the following combinations (b) of substituents are more preferable; the following combinations (c) are still more preferably; and the following combinations (d) are particularly preferable.

(a) J represents -CO-, -CONR$^{10}$-, a phenylene group, or -$C_6H_4$CO-, where $R^{10}$ represents a hydrogen atom, an alkyl group, or an aryl group. W represents a single bond, an imino group, an alkylene group, or an arylene group. $R^1$ represents a hydrogen atom, an alkyl group, or an aryl group. $R^2$ to $R^5$ each independently represent a single bond, a hydrogen atom, an alkyl group, an aryl group, an amino group, an alkoxy group, an aryloxy group, an acyl group, an alkoxycarbonyl group, an aryloxycarbonyl group, an acyloxy group, an acylamino group, an alkoxycarbonylamino group, an aryloxycarbonylamino group, a sulfonylamino group, a carbamoyl group, a sulfonyl group, a hydroxy group, a halogen atom, a cyano group, a carboxyl group, a nitro group, or a heterocyclic group, and any one of $R^2$ to $R^5$ represents a single bond to bond to W. $R^6$ to $R^9$ each independently represent a hydrogen atom, an alkyl group, an aryl group, an amino group, an alkoxy group, an aryloxy group, an acyl group, an alkoxycarbonyl group, an aryloxycarbonyl group, an acyloxy group, an acylamino group, an alkoxycarbonylamino group, an aryloxycarbonylamino group, a sulfonylamino group, a carbamoyl group, a sulfonyl group, a hydroxy group, a halogen atom, a cyano group, a carboxyl group, a nitro group, or a heterocyclic group.

(b) J represents -$C_6H_4$CO-, -CONR$^{10}$-, or a phenylene group, where $R^{10}$ represents a hydrogen atom or an alkyl group. W represents an imino group, a single bond, or an arylene group. $R^1$ represents a hydrogen atom or an aryl group. $R^2$ to $R^5$ each independently represent a hydrogen atom, an alkyl group, an aryl group, an amino group, an alkoxy group, an aryloxy group, an acyl group, an acylamino group, a sulfonylamino group, a carbamoyl group, a sulfonyl group, a hydroxy group, a halogen atom, or a cyano group, and any one of $R^2$ to $R^5$ represents a single bond to bond to W. $R^6$ to $R^9$ each independently represent a hydrogen atom, an alkyl group, an aryl group, an amino group, an alkoxy group, an aryloxy group, an acyl group, an acylamino group, a sulfonylamino group, a carbamoyl group, a sulfonyl group, a hydroxy group, a halogen atom, or a cyano group.

(c) J represents -$C_6H_4$CO- or -CONR$^{10}$-. $R^{10}$ represents a hydrogen atom. W represents an imino group or a single bond. $R^1$ represents a hydrogen atom or an aryl group. $R^2$ to $R^5$ each independently represent a hydrogen atom, an acyl group, a hydroxyl group, a halogen atom, or a cyano group, and any one of $R^2$ to $R^5$ represents a single bond to bond to W. $R^6$ to $R^9$ each independently represent a hydrogen atom, an acyl group, a hydroxyl group, a halogen atom, or a cyano group.

(d) J represents -$C_6H_4$CO-. W represents an imino group. $R^1$ represents a hydrogen atom or an aryl group. $R^2$ to $R^5$ each independently represent a hydrogen atom, an acyl group, a hydroxyl group, a halogen atom, or a cyano group, and any one of $R^2$ to $R^5$ represents a single bond to bond to W. $R^6$ to $R^9$ each independently represent a

hydrogen atom.

The specific examples of the repeating units represented by formula (1) are shown below. However, the present invention is not limited thereto.

M-1

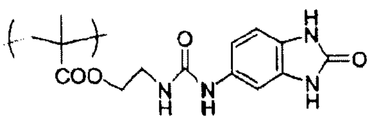

M-2

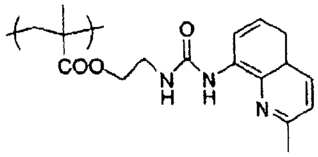

M-3

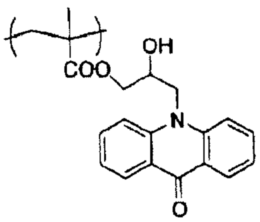

M-4

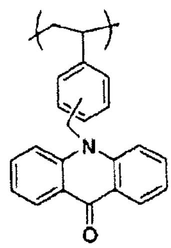

M-5

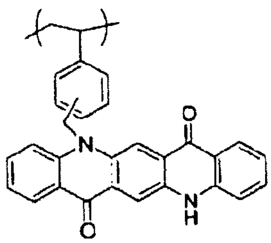

M-6

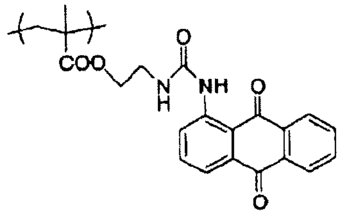

M-7

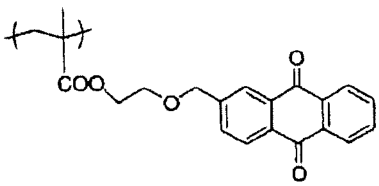

M-8

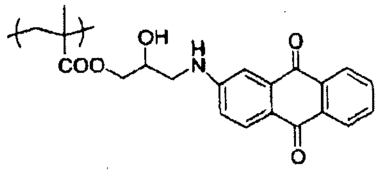

M-9

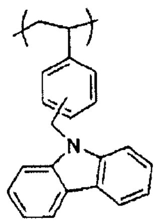

M-10

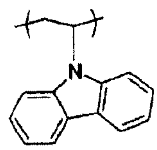

M-11 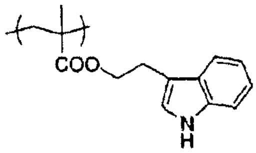 M-12 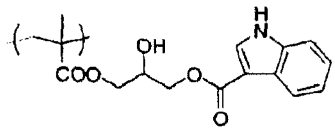

M-13 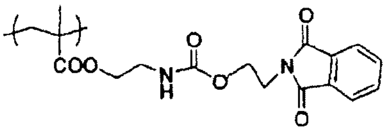 M-14 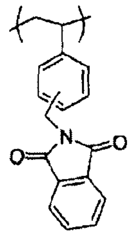

M-15 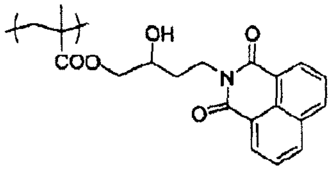 M-16 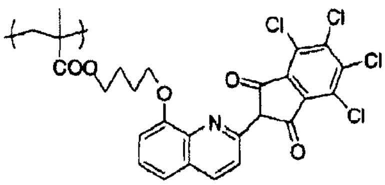

M-17

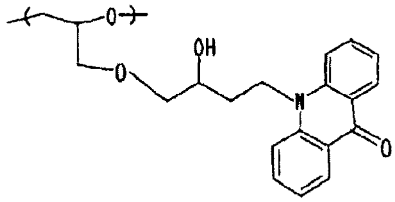

The specific examples of the repeating units represented by formula (2) are shown below. However, the present invention is not limited thereto.

(1)

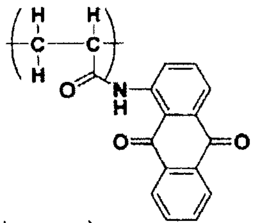

(2)

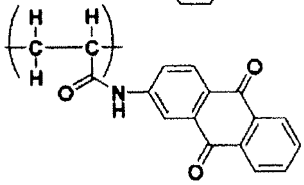

(6)

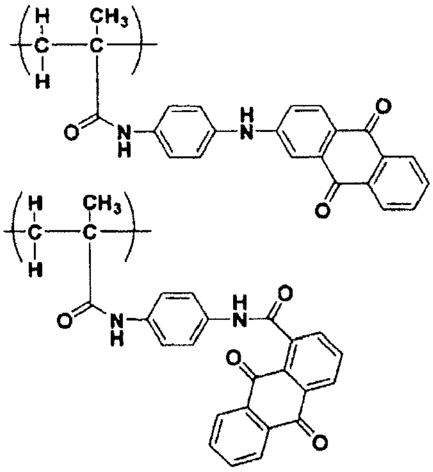

(7)

(3)

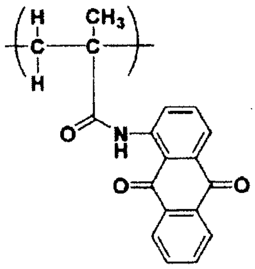

(8)

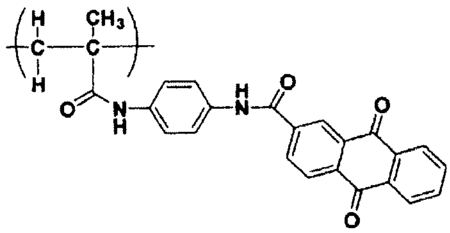

(4)

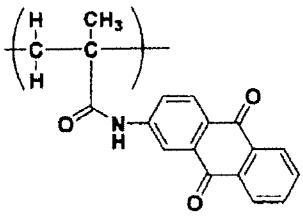

(9)

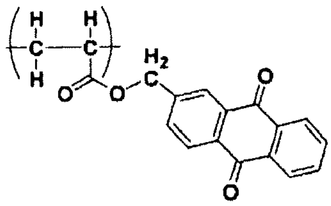

(5)

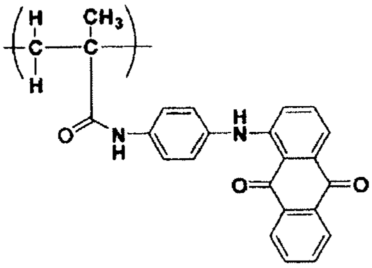

(10)

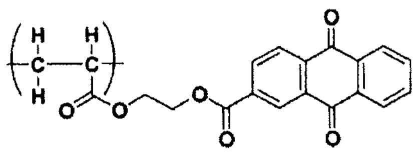

(11)

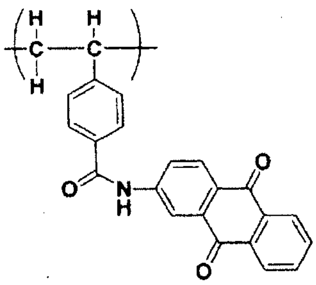

(12)

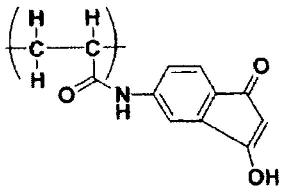

(13)

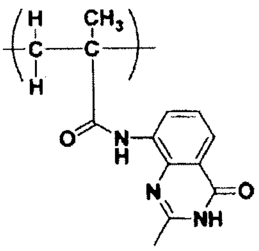

(14)

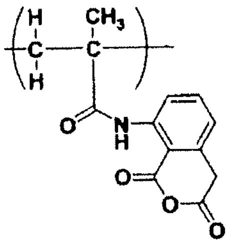

(15)

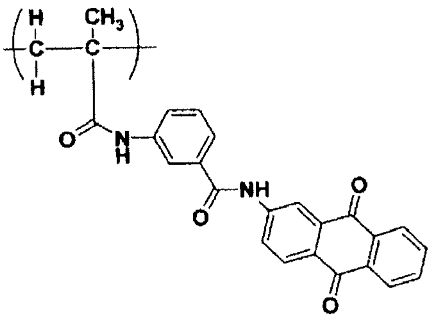

(16)

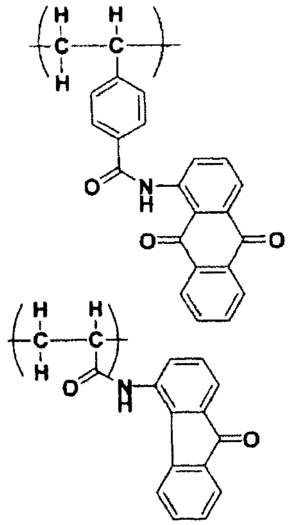

(17)

(18)

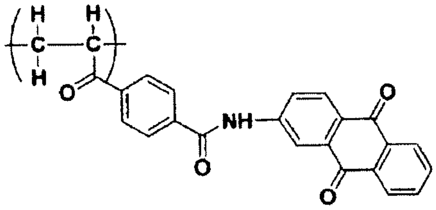

(19)

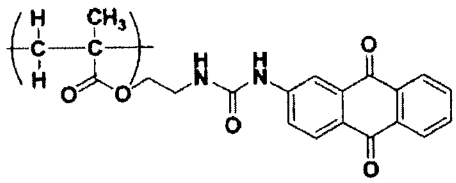

(20)

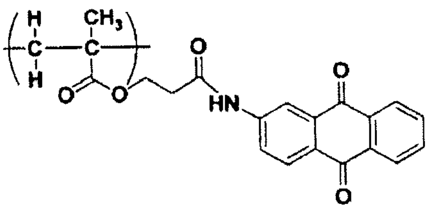

The polymer compound used in the present invention is particularly preferably a graft copolymer further containing, as a copolymer unit, a polymerizable oligomer having an ethylenically unsaturated double bond at its terminal. The copolymer may be a random copolymer or a block copolymer, but it is preferable that the copolymer is a random copolymer. The polymerizable oligomer contains a polymer chain moiety, and a polymerizable functional group moiety having an ethylenically unsaturated double bond at a terminal of the polymer chain. Such a polymerizable oligomer is a compound having a given molecular weight and is therefore called a macro-monomer.

From the viewpoint of obtaining a desired graft polymer, the group having an ethylenically unsaturated double bond is preferably present at only one of the terminals of the polymer chain. The group having an ethylenically unsaturated double bond is preferably a (meth)acryloyl group or a vinyl group, particularly preferably a (meth)acryloyl group.

The polystyrene-equivalent number-average molecular weight (Mn) of the macromonomer is preferably in the range of 1,000 to 10,000, particularly preferably in the range of 2,000 to 9,000.

The polymer chain moiety is generally a homopolymer or copolymer formed from at least one kind of monomer selected from alkyl (meth)acrylates, styrene and derivatives thereof, acrylonitrile, vinyl acetate, and butadiene, or is polyethylene oxide, polypropylene oxide, and polycaprolactone.

In regard to the polymerizable oligomer, reference may be made to the descriptions of JP-A-2007-9117, the disclosure of which is incorporated herein by reference.

Specific examples of the polymer compound (copolymer) used in the present invention will be given below, but the present invention is not intended to be limited to these. Here, the terminal groups in the polymer compound are not particularly limited, and may be, for example, a hydrogen atom or a polymerization terminator residue. Furthermore, the specific examples shown below may be random copolymers or block copolymers, and are not particularly limited.

1) A copolymer of a monomer, which provides the above exemplified compound M-1, and polymethylmethacrylate having a methacryloyl group at one terminal (mass ratio: 10:90).
2) A copolymer of a monomer, which provides the above exemplified compound M-1, and polyethylene glycol mono (meth)acrylate (mass ratio: 15:85).
3) A copolymer of a monomer, which provides the above exemplified compound M-1, and polycaprolactone having a methacryloyl group at its terminal (mass ratio: 20:80).
4) A copolymer of a monomer, which provides the above exemplified compound M-4, and polymethylmethacrylate having a methacryloyl group at its terminal (mass ratio: 10:90).
5) A copolymer of a monomer, which provides the above exemplified compound M-4, and polyethylene glycol mono (meth)acrylate (mass ratio: 20:80).
6) A copolymer of a monomer, which provides the above exemplified compound M-4, and polycaprolactone having a methacryloyl group at its terminal (mass ratio: 25:75).
7) A copolymer of a monomer, which provides the above exemplified compound M-4, 3-(N,N-dimethylamino)propylacrylamide, and polymethylmethacrylate having a methacryloyl group at one terminal (mass ratio: 10:20:70).
8) A copolymer of a monomer, which provides the above exemplified compound M-4, 3-(N,N-dimethylamino)propylacrylamide, and polyethylene glycol mono(meth)acrylate (mass ratio: 15:25:60).
9) A copolymer of a monomer, which provides the above exemplified compound M-4, 3-(N,N-dimethylamino)propylacrylamide, polymethylmethacrylate having a methacryloyl group at one terminal, and polyethylene glycol mono (meth)acrylate (mass ratio: 8:22:50:20).
10) A copolymer of a monomer, which provides the above exemplified compound M-4, 2-(N,N-dimethylamino)ethyl (meth)acrylate, and polymethylmethacrylate having a methacryloyl group at one terminal (mass ratio: 8:42:50).
11) A copolymer of a monomer, which provides the above exemplified compound M-4, 2-vinylpyridine, and polymethylmethacrylate having a methacryloyl group at one terminal (mass ratio: 20:30:50).
12) A copolymer of a monomer, which provides the above exemplified compound M-4, p-vinylbenzyl-N,N-dimethylamine, and polyethylene glycol mono(meth)acrylate (mass ratio: 7:43:50).
13) A copolymer of a monomer, which provides the above exemplified compound M-4, 3-(N,N-dimethylamino)ethyl (meth)acrylate, and poly n-butylmethacrylate having a methacryloyl group at one terminal (mass ratio: 10:10:80).
14) A copolymer of a monomer, which provides the above exemplified compound M-4, styrene, and polymethylmethacrylate having a methacryloyl group at one terminal (mass ratio: 15:15:70).
15) A copolymer of a monomer, which provides the above exemplified compound M-4, N,N-dimethylacrylamide, and polymethylmethacrylate having a methacryloyl group at one terminal (mass ratio: 20:10:70, or 5:25:70).
16) A copolymer of a monomer, which provides the above exemplified compound M-6, 3-(N,N-dimethylamino) propylacrylamide, and polymethylmethacrylate having a methacryloyl group at one terminal (mass ratio: 10:40:50).
17) A copolymer of a monomer, which provides the above exemplified compound M-6, 3-(N,N-dimethylamino) propylacrylamide, and polyethylene glycol mono(meth)acrylate (mass ratio: 15:15:70).
18) A copolymer of a monomer, which provides the above exemplified compound M-6, 3-(N,N-dimethylamino) propylacrylamide, and polymethylmethacrylate having a methacryloyl group at one terminal (mass ratio: 10:20:70).
19) A copolymer of a monomer, which provides the above exemplified compound M-13, 3-(N,N-dimethylamino)ethyl (meth)acrylate, and polymethylmethacrylate having a methacryloyl group at one terminal (mass ratio: 25:25:50).
20) A copolymer of a monomer, which provides the above exemplified compound M-13, 4-vinylpyridine, and polymethylmethacrylate having a methacryloyl group at one terminal (mass ratio: 5:25:75).
21) A copolymer of a monomer, which provides the above exemplified compound M-13, 3-(N,N-dimethylamino)ethyl (meth)acrylate, and polyethylene glycol mono(meth)acrylate (mass ratio: 10:30:60).

22) A copolymer of a monomer, which provides the above exemplified compound M-14, 3-(N,N-dimethylamino)ethyl (meth)acrylate, and polymethylmethacrylate having a methacryloyl group at one terminal (mass ratio: 15: 25:60).

(P1)

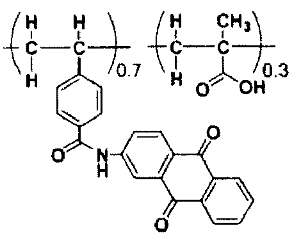

(P6)

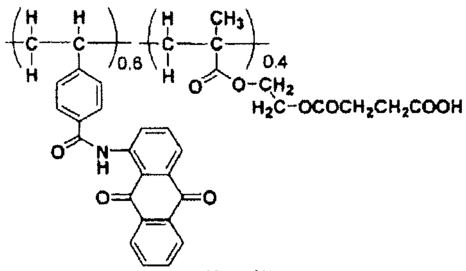

(P2)

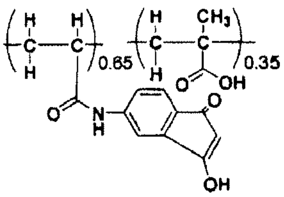

(P7)

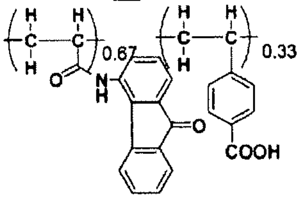

(P3)

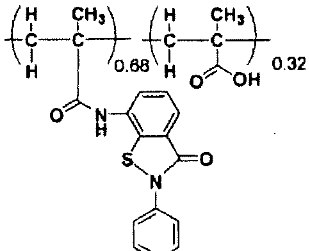

(P8)

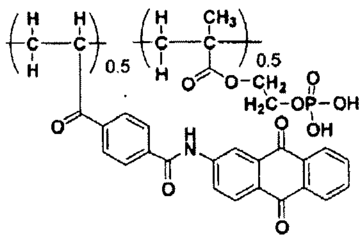

(P4)

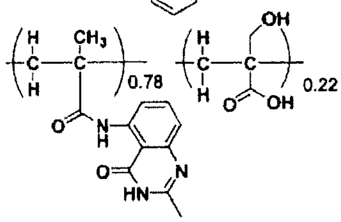

(P9)

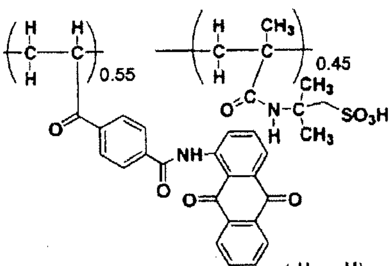

(P5)

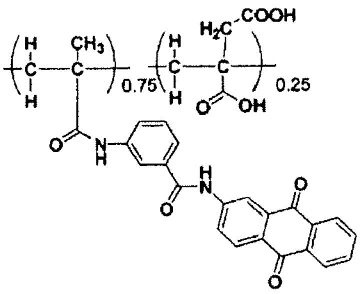

(P10)

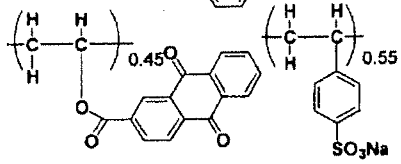

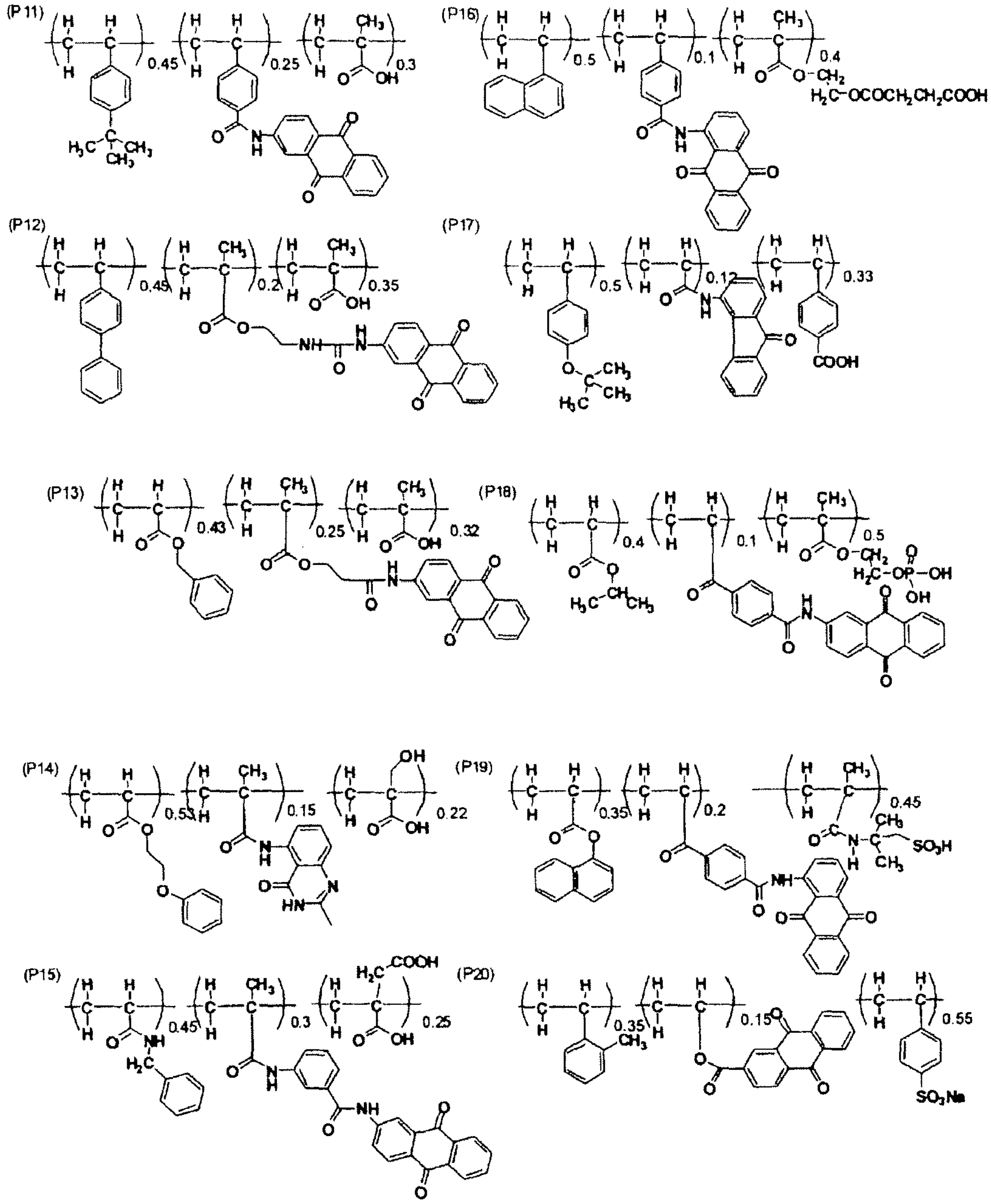
(P11) (P16) (P12) (P17) (P13) (P18) (P14) (P19) (P15) (P20)

The specific polymer compound used in the present invention can be obtained by radical polymerization, in a solvent, of the polymerizable oligomer and/or each monomer. In this polymerization, a radical polymerization initiator is used in general. In addition to the initiator, a chain transfer agent (e.g., 2-mercaptoethanol or dodecyl mercaptan) may be further added for the synthesis of the specific polymer compound.

The molecular weight of the specific polymer compound is not particularly limited, but the weight-average molecular weight (Mw) thereof, if it is a polymer compound, is preferably 1,000 to 100,000, more preferably 5,000 to 50,000. When the molecular weight is too large, entanglement among polymeric chains becomes too large. As a result, it becomes difficult for them to serve as a dispersant, which occasionally makes it difficult to maintain a good dispersion state. It should be noted that when described simply as a molecular weight in the present invention, the molecular weight means a weight average molecular weight, and the weight average molecular weight, unless otherwise specified, means an average molecular weight calculated in terms of polystyrene that is measured by gel permeation chromatography (carrier: tetrahydrofuran). The favorable range in molecular weight of other polymer compound described later is the same as the range above.

The acid value of the specific polymer compound in the present invention is preferable in the range of 50 mg

KOH/g to 300 mg KOH/g, more preferably in the range of 100 mg KOH/g to 270 mg KOH/g, and particularly preferable in the range of 150 mg KOH/g to 250 mg KOH/g from the viewpoint of expanding the flexibility of the medium used for dispersion (freedom degree in selecting the medium).

The content of the polymer compound in the dispersion according to the present invention is not particularly limited, and preferably 5 to 90% by mass, more preferably 10 to 80% by mass, with respect to the total amount of the dispersion. The mass ratio thereof to the water-insoluble colorant (D/P ratio) is preferably 0.01 to 2.0, more preferably 0.1 to 1.0, still more preferably 0.1 to 0.5, and particularly preferably 0.1 to 0.3. By using the polymer compound in the above range, it enables the polymer compound to function effectively as a dispersant in the ink composition containing a hydrophobic organic solvent. Although the reason is not yet understood, it is speculated that, with the amount in the above range, it enables to fully bring out the unique interactions between the polymer compound and the water-insoluble colorant, and, on the other hand, to promote improvement of significant ink properties without generating extra products which floats in the dispersion medium and adversely affects ink properties.

The containing mode in the particular polymer compound in the dispersion according to the present invention is not limited in particular, and either being contained independently from other component or being collectively contained together with another component may be suitable. Thus, in the present invention, the terminology "dispersion containing the water-insoluble fine particles together with the specific polymer compound" means that the polymer compound may be contained in the water-insoluble fine particles in the dispersion or may coexist separately from the fine particles in the dispersion. Accordingly, the state in which a part of the polymer compound may be in dissociation equilibrium between adsorption on and release from the fine particles, is also included in the above concept of containing mode. In the dispersion according to the present invention, it is preferable that the polymer compound coexists particularly during generation of fine particles in the reprecipitation method described below, thus embedding the polymer compound and the like into or making it strongly adsorbed on the fine particles and thus, making it resistant to release, for example, by subsequent solvent substitution. It should be also noted that the term "dispersion" that is used in the present invention means a composition having prescribed fine-particles dispersed therein. The form of the dispersion is not particularly limited. The dispersion is used as a meaning to embrace a liquid composition (dispersion liquid), a paste-like composition, and a solid composition.

The dispersion of the present invention is produced by dissolving a water-insoluble colorant into an aprotic water-soluble organic solvent in the presence of alkali, and making the solution of the water-insoluble colorant and an aqueous medium to contact each other, to give a dispersion in which fine particles of the water-insoluble colorant are generated. In this process, it is preferable that the polymer compound represented by formula (1) or (2) is contained in the solution of the water-insoluble colorant and/or the aqueous medium. The dispersion for use in the present invention is preferably a dispersion prepared by a build-up method. In the present invention, the build-up method is defined as a method of forming nanometer-size organic pigment particles from an organic compound or a precursor of the organic compound dissolved in a solvent (molecular dispersion) through chemical operation without requiring any additional fining operation. Although the build-up method is roughly classified into a vapor-phase method and a liquid-phase method, it is preferable in the present invention that the fine particles are formed according to the liquid-phase method.

The specific polymer compound is mainly used to function as an improver of particle dispersibility of the water-insoluble colorant (i.e., as a dispersant). Alternatively, it may also be used to function as a particle-formation or particle-growth adjustor during generation of particles in the reprecipitation method. From this point, the addition amount of the above polymer compound into the solution of the water-insoluble colorant and/or aqueous medium is preferably from 0.001 to 10,000 mass parts with respect to the water-insoluble colorant. It is more preferably from 0.05 to 1,000 mass parts, further preferably from 0.05 to 500 mass parts, and particularly preferable from 0.1 to 200 mass parts.

In the dispersion of the present invention, in addition to the above polymer compound having a constitutional unit represented by formula (1) or (2), another polymer compound and/or low molecular weight compound may be concurrently used. With regard to the another polymer compound to be used, a polymer compound which is soluble into an aprotic organic solvent in the presence of alkali, and which exhibits, when a solution prepared by dissolving the water-insoluble colorant and the above dispersant are allowed to mix each other, the dispersion effect by forming particles containing the water-insoluble colorant in an aqueous medium is appropriately employable. Use can be made of, for example, polymer compounds having at least one kind of group selected from a carboxylic group, a sulfonic group and a phosphoric group as its hydrophilic part, and having the hydrophilic part and the hydrophobic part in the same molecule. Such a polymer compound is not particularly limited, as far as the compound is capable of achieving the object of the present invention. Preferably used are polymer compounds obtained by combining at least one monomer, as the hydrophilic part, selected from monomers represented by (meth)acrylic acid, maleic acid, itaconic acid, fumaric acid, β-CEA, styrene sulfonic acid, vinyl sulfonic acid, 4-vinylbenzene sulfonic acid, allyl sulfonic acid, 3-(meth)acryloyloxypropane sulfonic acid, 2-methylallyl sulfonic acid, 2-(meth)acryloyloxyethane sulfonic acid, 2-acrylamide-2-methylpropane sulfonic acid and salts thereof, mono{2-(meth)acryloyloxyethyl} acid phosphate, and 2-methacryloxyethyl phosphonic acid, together with at least one monomer arbitrarily selected from α-olefinic aromatic hydrocarbons having 8 to 20 carbon atoms such as styrene, 4-methylstyrene, 4-ethylstyrene, vinylnaphthalene, vinylnaphthalene derivatives; and vinylesters

having 3 to 20 carbon atoms such as vinyl acetate and vinyl propionate; olefin carboxylic acid esters having 4 to 20 carbon atoms such as methyl methacrylate, ethyl methacrylate, propyl methacrylate, butyl methacrylate, benzyl methacrylate, 2-ethylhexyl methacrylate, stearyl methacrylate, methyl acrylate, ethyl acrylate, butyl acrylate, benzyl acrylate, 2-ethylhexyl acrylate, methyl crotonate, and ethyl crotonate; vinylic aromatic amines having 8 to 20 carbon atoms such as 4-vinylpyridine, and 4-vinyl aniline; vinylic amide compounds having 3 to 20 carbon atoms such as acrylamide, methacrylamide, and benzyl methacrylamide; olefin phenols having 8 to 20 carbon atoms such as 4-vinylphenol; and dienic compounds having 4 to 20 carbon atoms such as butadiene, and isoprene, in addition to those, polyfunctional monomers, macromonomers, conventionally known monomers, and derivatives thereof. Those other polymer compounds function as a dispersant, and only one kind of polymer compound may be used, or, alternatively, two or more kinds of polymer compounds may be used in combination.

The polymer compound having a constitutional unit represented by formula (1) or (2) and the polymer compound different from it preferably have a constitutional unit containing at least one kind of acid group as a hydrophilic unit. The acid group is preferably selected from a carboxylic acid group, a sulfonic acid group, and a phosphoric acid group. A polymer compound prepared by copolymerizing monomers having those acid group salt and hydrophilic monomer components such as vinyl ethers and allyl ethers each having a polyether chain (e.g., polyoxyethylene alkylether, polyoxyethylene higher fatty acid ester, and polyoxyethylene alkyl phenyl ether) at those side-chains. Regarding the polymerization method, there is no limitation, in particular, generally in any of radical polymerization, ionic polymerization, living polymerization, and coordinating polymerization; solutions as the medium; and measure such as bulk, emulsification. The radical polymerization with solution is preferable from the viewpoint of convenience of manipulation.

The above polymer compound having a constitutional unit represented by formula (1) or (2) and the different polymer compound may be a copolymer which has any form of block-copolymer, random copolymer, or graft copolymer. Use of the block-copolymer, or graft copolymer is preferable since those copolymers readily impart a favorable dispersibility to a water-insoluble colorant.

The above polymer compound having a constitutional unit represented by formula (1) or (2) and the different polymer compound may be a copolymer which has any form of block-copolymer, random copolymer, or graft copolymer. Use of the block-copolymer, or graft copolymer is especially preferable since those copolymers readily impart a favorable dispersibility to a water-insoluble colorant.

In the polymer compound having a repeating unit represented by formula (1) or (2) and the polymer compound different from it, the ratio of the hydrophilic portion such as the acid group to the hydrophobic portion such as the ring structure group is not particularly limited, but it is preferable not to raise the ratio of the hydrophobic monomer component excessively, for providing fine particles of the water-insoluble colorant with more favorable dispersion stability. Hydrophilicity is a property higher in affinity to water and thus more soluble in water, while hydrophobicity is a property lower in affinity to water and less soluble in water. When the hydrophilic portion of the dispersant consists only of groups other than those mentioned above, such as primary, secondary and tertiary amino groups and quaternary ammonium group, dispersion stability may become relatively lower, although dispersion stability is sufficient in aqueous organic pigment dispersions containing alkali. In the present invention, as described above, it is preferable to have the polymer compound having a constitutional unit represented by formula (1) or (2) or the different polymer compound, functioning as a dispersant, together with the water-insoluble colorant, in a state dissolved in a medium, whereby the desired action between the dispersant and water-insoluble compound can be obtained and the contact efficiency to the fine particle surface is improved, and it is thus possible to use a variety of compounds as the dispersant.

For the purpose of further enhancing the stability of the dispersion of the present invention, yet another dispersant (e.g., a surfactant, a polymer dispersant) can be also added, in addition to the aforementioned ones. Specifically, such a surfactant may be properly selected from any of known surfactants and derivatives thereof, including anionic surfactants, such as alkylbenzene sulfonates, alkylnaphthalene sulfonates, higher-fatty acid salts, sulfonates of higher fatty acid esters, sulfuric acid ester salts of higher alcohol ether, sulfonates of higher alcohol ether, alkylcarboxylic acid salts of higher alkylsulfonamide, and alkylphosphoric acid salts; nonionic surfactants, such as polyoxyethylene alkyl ethers, polyoxyethylenealkyl phenyl ethers, polyoxyethylene fatty acid esters, sorbitan fatty acid esters, ethyleneoxide adducts of acetylene glycol, ethyleneoxide adducts of glycerol, and polyoxyethylene sorbitan fatty acid esters; and in addition to the above, amphoteric surfactants, such as alkyl betaines and amido betaines; silicone-based surfactants, and fluorine-containing surfactants.

Specific examples of the polymer dispersant include polyvinyl pyrrolidone, polyvinyl alcohol, polyvinyl methyl ether, polyethylene oxide, polyethyleneglycol, polypropyleneglycol, and polyacrylamide. Among these, polyvinyl pyrrolidone is preferably used.

Further, as a polymer compound that can be used as yet another (polymer) dispersant, use can be preferably made of natural polymer compounds, such as albumin, gelatin, rosin, shellac, starch, gum Arabic, and sodium alginate; and their modified compounds. Further, these dispersants may be used singly, or in a combination of two or more. The amount of the other polymer compound and the surfactant is not particularly limited, but it is preferable, for example, to adjust the total amount in the favorable range of the polymer compound having a constitutional unit represented by

formula (1) or (2) described above.

In view of improving light fastness when the dispersion of the present invention is used as an ink that is described later, the above-described polymer compounds, surfactants, and/or dispersants can be preferably used. It is especially preferred to use a polymer compound or a polymer dispersant, each of which is soluble or dispersible in a particular organic solvent that is used for a cleaning treatment that is explained later, in consideration of improving light fastness and maintaining the dispersion at a low viscosity level even though the dispersion is concentrated.

Any kind of aprotic organic solvent may be used in the present invention, so long as the solvent is able to dissolve the water-insoluble colorant and the polymer compound. Aprotic organic solvents having 5% by mass or more of solubility to water are preferably used. Furthermore, aprotic organic solvents that can be freely mixed with water are preferable.

Specifically, examples of preferable solvents include dimethylsulfoxide, dimethylimidazolidinone, sulfolane, N-methyl pyrrolidone, dimethylformamide, N,N-dimethylacetoamide, acetonitrile, acetone, dioxane, tetramethylurea, hexamethylphosphoramide, hexamethylphosphoro triamide, pyridine, propionitrile, butanone, cyclohexanone, tetrahydrofuran, tetrahydropyran, ethyleneglycol diacetate, and γ-butyrolactone. Of these solvents, dimethylsulfoxide, N-methyl pyrrolidone, dimethylformamide, N,N-dimethylacetoamide, dimethylimidazolidinone, sulfolane, acetone, acetonitrile, and tetrahydrofuran are preferable; and dimethylsulfoxide and N-methyl pyrrolidone are more preferable. Further, these solvents may be used singly or in combination of two or more.

A proportion of the aprotic solvent to be used is not particularly limited. However, it is preferred to use the solvent in the proportion of 2 parts by mass to 500 parts by mass, more preferably from 5 parts by mass to 100 parts by mass, with respect to 1 part by mass of the water-insoluble colorant respectively, in order to improve a dissolution state of the water-insoluble colorant, to easily form fine particles having a desired particle diameter, and to improve a color density of aqueous dispersion.

Any kind of alkali may be used in the present invention, so long as the alkali is able to dissolve the water-insoluble colorant and the polymer compound. In terms of high solubilizing ability of the water-insoluble colorant, hydroxide of alkali metal, alkoxide of alkali metal, hydroxide of alkaline-earth metal, alkoxide of alkaline-earth metal, and organic strong base may preferably be used. Examples thereof include inorganic bases such as sodium hydroxide, potassium hydroxide, cesium hydroxide, lithium hydroxide, magnesium hydroxide, calcium hydroxide, and barium hydroxide; organic bases such as trialkylamine, diazabicyclo undecene (DBU), sodium methoxide, sodium tert-butoxide, potassium tert-butoxide, quaternary ammonium compounds such as tetramethylammonium hydroxide, benzyltrimethylammonium hydroxide, chlorine hydroxide, and tetrabutylammonium hydroxide, guanidine, 1,8-diazabicyclo[5.4.0]-7-undecene, and 1,8-diazabicyclo[4,3,0]-7-nonene. The above inorganic bases and organic bases can be used in combination.

Especially, potassium hydroxide, sodium hydroxide, quaternary ammonium compounds such as tetramethylammonium hydroxide, benzyltrimethylammonium hydroxide, chlorine hydroxide, and the tetrabutylammonium hydroxide are preferable as the above alkalis.

Further, only one kind of alkali may be used, or, alternatively, two or more kinds of alkalis may be used in combination. An amount of use of the alkali is not particularly limited but the alkali may preferably be used in an amount of 0.1 to 10 mass parts, more preferably 0.5 to 5 mass parts, and further preferably 1 to 4 mass parts, with respect to 1 mass part of the water-insoluble colorant.

In the present invention, the "aqueous medium" refers to water alone, or a mixed solvent of water and an organic solvent soluble in water. The addition of the organic solvent is preferably used, for example, (i) in the case where use of water only is not sufficient for uniformly dissolving a water-insoluble colorant and a dispersant, and (ii) in the case where use of water only is not sufficient for obtaining viscosity required for the flow through a flow path, and the like. In the case of alkaline, for example, the organic solvent is preferably an amide series solvent or a sulfur-containing compound solvent, more preferably the sulfur-containing-compound solvent, and particularly preferably dimethylsulfoxide (DMSO). In the case of acidic, the organic solvent is preferably a carboxylic acid series solvent, a sulfur-containing compound solvent or a sulfonic acid series solvent, more preferably a sulfonic acid series solvent, and particularly preferably methanesulfonic acid. Additionally, an inorganic compound salt, a dispersant as described above or the like may be dissolved into the aqueous medium as required.

In the present invention, the solution of the water-insoluble colorant and/or the aqueous medium may contain at least one of additives such as crystal-growth-preventing agents, ultraviolet absorbents, antioxidants and resin additives, as needed.

Examples of the crystal-growth-preventing agent include phthalocyanine derivatives and quinacridone derivatives well known in this technical field. Specific examples thereof include phthalimidomethyl derivatives of phthalocyanine, sulfonic acid derivatives of phthalocyanine, N-(dialkylamino)methyl derivatives of phthalocyanine, N-(dialkylaminoalkyl) sulfonamide derivatives of phthalocyanine, phthalimidomethyl derivatives of quinacridone, sulfonic acid derivatives of quinacridone, N-(dialkylamino)methyl derivatives of quinacridone and N-(dialkylaminoalkyl)sulfonamide derivatives of quinacridone.

Examples of the ultraviolet absorbent include ultraviolet absorbents such as metal oxides, aminobenzoate-series ultraviolet absorbents, salicylate-series ultraviolet absorbents, benzophenone-series ultraviolet absorbents, benzotriazole-series ultraviolet absorbents, cinnamate-series ultraviolet absorbents, nickel chelate-series ultraviolet absorbents, hindered amine-series ultraviolet absorbents, urocanic acid-series ultraviolet absorbents and vitamin-series ultraviolet absorbents.

Examples of the antioxidant include hindered phenolic compounds, thioalkanic acid ester compounds, organic phosphorus compounds and aromatic amines.

Examples of the resin additives include synthetic resins such as anionically modified polyvinyl alcohol, cationically modified polyvinyl alcohol, polyurethane, carboxymethyl cellulose, polyester, polyallylamine, polyvinyl pyrrolidone, polyethylene imine, polyamine sulfone, polyvinylamine, hydroxyethyl cellulose, hydroxypropyl cellulose, melamine resins and modified products thereof. All of these crystal-growth-preventing agents, ultraviolet absorbents and resin additives may be used either singly or in any combination thereof.

In the present invention, the embodiment wherein a solution of a water-insoluble colorant homogeneously dissolved therein and an aqueous medium are mixed is not particularly limited. Examples of the embodiment include an embodiment in which a water-insoluble colorant solution is added to an aqueous medium with being stirred, and an embodiment in which a water-insoluble colorant solution and an aqueous medium are each delivered to a certain length of flow path in the same longitudinal direction, and both the solution and the medium are allowed to contact with each other in the course of getting through the flow path, thereby to deposit fine particles of the water-insoluble colorant. With respect to the former (the embodiment of stirring and mixing), it is especially preferred to use an embodiment in which a feed pipe or the like is introduced in an aqueous medium so that a water-insoluble colorant solution is fed from the pipe for addition in liquid. More specifically, the addition in liquid can be performed by using an apparatus described in International Publication WO 2006/121018 pamphlet, paragraph Nos. 0036 to 0047. With respect to the latter (the embodiment of mixing both the liquid and the solvent by using flow path), there can be used micro reactors described in JP-A-2005-307154, paragraph Nos. 0049 to 0052 and Figs. 1 to 4, and JP-A-2007-39643, paragraph Nos. 0044 to 0050. In the present invention, a gas, such as the air or oxygen, may coexist at the time of formation of particles. For example, the gas may be used as an oxidant. The embodiment of making the gas coexist is not particularly limited. For example, the gas may be dissolved in a solution of the water-insoluble colorant and/or an aqueous medium in advance. Alternatively, the gas may be introduced into another medium different from these solution and medium, and followed by contacting said another medium with these solution and medium to introduce thereinto.

In the preparation of the dispersion of the present invention, it is preferable to introduce a heating step. Regarding the significance of introducing the heating step, there can be represented by the effects described in Japanese Patent No. 3936558 and the so-called Ostwald ripening. This treatment can decrease the viscosity of the dispersion and also improve the dispersion stability. In addition, the increase in primary particle diameter by heating is suppressed by coprecipitation of two or more kinds of pigments (formation of solid solution) in the dispersion according to the present invention.

It is preferable that the above heating is carried out at 30°C to 110°C, and that the heating time is from 10 to 360 minutes. It is also preferable that the heating treatment is carried out after allowing the water-insoluble colorant solution and the aqueous medium to mix each other to obtain the dispersion among which the fine particles are dispersed.

In addition, the water-insoluble colorant preferably has a stable crystalline structure in the dispersion according to the present invention, for improvement in durability (heat resistance, light fastness, chemical resistance and others) when used, for example, as a recording liquid. The heating step described above may be carried out for forming the crystalline structure, but the crystalline structure may be formed alternatively by bringing the above dispersion or the soft aggregates of the above water-insoluble colorant into contact with the vapor of an organic solvent and/or an organic solvent. As the organic solvent, ester series solvents, ketone series solvents, alcoholic solvents, aromatic solvents and aliphatic solvents are preferable. Ester series solvents, ketone series solvents and alcoholic solvents are more preferable. In addition, the heating step and the contacting step with the organic solvent can be used in combination.

Although the reason is not clear, it is possible to increase crystallite diameter without increasing the particle diameter of the colorant particles contained in the dispersion by the contact treatment with an organic solvent. It is thus possible to increase the crystallinity of the colorant particles, while the primary particle diameter during precipitation of the particles is preserved. In addition, in the redispersion treatment described below, it is possible to redisperse the aggregate into water and the like while the primary particle diameter during precipitation of the particles is preserved and to also preserve a dispersion having high dispersion stability. Also by conducting the treatment, viscosity of the aggregate-redispersion remains low, even when the aggregate-redispersion is highly concentrated. It further shows favorable ejecting efficiency and dispersion stability, when used as an inkjet recording liquid. These advantageous effects are considered to be based on the decrease of surface energy of the water-insoluble colorant owing to having a stable crystalline structure. A dispersion more excellent in dispersion stability can be obtained, if the excessive polymer compounds contained in the dispersion are liberated and removed, by bringing the dispersion into contact with the organic solvent above and then, separating the dispersion by centrifugal separation or filter filtration.

Because the specific polymer compound according to the present invention present in the area close to the

surface of water-insoluble colorant particles is adsorbed tightly on the water-insoluble colorant particles in the dispersion according to the present invention during formation of the crystalline structure as described above, the particle diameter of the water-insoluble colorant particles is not increased. Therefore, the high dispersion stability is preserved without increase while keeping the primary particle diameter obtained during particle precipitation, even after the redispersion treatment described below.

A condition for deposition and formation of the particles of the water-insoluble colorant is not particularly limited, and can be selected from a range from a normal pressure condition to a subcritical or supercritical condition. The temperature at which the particles are prepared under normal pressure is preferably -30 to 100°C, more preferably -10 to 60°C, and particularly preferably 0 to 30°C. A mixing ratio of the water-insoluble colorant solution to the aqueous medium is preferably 1/50 to 2/3, more preferably 1/40 to 1/2, and particularly preferably 1/20 to 3/8 in volume ratio. The concentration of the particles of the water-insoluble colorant in the mixed liquid at the time of deposition of the particles is not particularly limited, but the amount of the particles of the water-insoluble colorant is preferably 10 to 40,000 mg, more preferably 20 to 30,000 mg, and particularly preferably 50 to 25,000 mg, per 1,000 ml of the solvent.

[Average primary particle diameter from observation by electron microscope (TEM average particle diameter)]

In the present invention, the average primary diameter of the water-insoluble colorant contained in the dispersion can be determined by observing the shapes of the particles under scanning electron microscope (SEM) or transmission electron microscope (TEM) and calculating according to the following way. In the case of using TEM, the dispersion (dispersion liquid) containing fine particles of water-insoluble colorant is diluted. The diluted dispersion is dropped onto a Cu 200 mesh to which a carbon film is attached, and then the fine particles are dried on the mesh. The diameter of each of 300 particles is measured from images of the particles photographed to 100,000 times using TEM (1200EX, trade name, manufactured by JEOL Ltd.), and then an average particle diameter is calculated. At this time, because the dispersion is dried on the Cu 200 mesh as described above, even the water-insoluble colorant is in a state well dispersed in the dispersion, there is a case where particles of the water-insoluble colorant apparently aggregate during the drying step, which makes it difficult to discriminate an accurate particle diameter. In this case, an average particle diameter is calculated by using isolated 300 particles that are not piled on other particles. When the particles of the water-insoluble colorant are not spherical, the width of the particle major axis (the longest size of the particle) is measured.

In the present invention, the average primary particle diameter of the water-insoluble colorant that is calculated from observation by using the transmission electron microscope is preferably from 5 nm to 80 nm, and more preferably from 5 nm to 45 nm. It is especially preferable that the average primary particle diameter is from 5 nm to 40 nm. When the average particle diameter is too small, it is sometimes difficult to keep a stable dispersion state in the dispersion for a long time, or it is sometimes difficult to obtain excellent light fastness. On the other hand, when the average particle diameter is too large, it is sometimes difficult to obtain good transparency of the dispersion. It is thus preferable to make the particle diameter fall in the range above, for providing a dispersion satisfying the requirements in transparency, dispersion stability, and light fastness simultaneously at high level.

In the present invention, the fine particles of the water-insoluble colorant may consist of only the water-insoluble colorant such as a pigment, or may contain other compound than the water-insoluble colorant such as the specific polymer compound having an electron-withdrawing group described above. At this time, the particles of the water-insoluble colorant may be composed of a solid solution of two or more kinds of pigments. However, a mixture of a portion having a crystalline structure and another portion having a non-crystalline structure may be present in the particle. Further, the pigment (water-insoluble colorant) and/or other compound may constitute the particle cores, and the above dispersant (polymer compound, surfactant or the like) may adsorb so as to cover the cores, to form fine particles. It is preferable that the water-insoluble colorant contained in the dispersion of the present invention has a crystalline structure from the viewpoint of light fastness.

The water-insoluble colorant in the present invention may be contained in resin fine particles or inorganic fine particles. At this time, it is preferable that the resin fine particles and inorganic fine particles are a non-colored component in order not to degrade a tint of the water-insoluble colorant. An average particle diameter of the resin fine particles or the inorganic fine particles is preferably from 6 nm to 200 nm. When the dispersion containing the water-insoluble colorant is used as an inkjet recording liquid, the average particle diameter is more preferably from 6 nm to 150 nm, and especially preferably from 6 nm to 100 nm, from the viewpoint of obtaining excellent emission (discharge) stability.

[Average particle diameter according to a dynamic light-scattering method]

In the present invention, a dispersion state of the water-insoluble colorant may be also evaluated according to a dynamic light-scattering method. Thereby, an average particle diameter of the water-insoluble colorant can be calculated. The principle of method is detailed below. Particles with the size ranging from about 1 nm to about 5 μm are momentarily changing their position and direction in Brownian motion such as translation and rotation. Accordingly, by

irradiating a laser light to these particles and then detecting the resultant scattered light, fluctuation of the scattered light intensity depending on Brownian motion is observed. By observing the fluctuation of the scattered light intensity with respect to time, a velocity (diffusion coefficient) of the particles in Brownian motion is calculated and the size of the particles can be known.

Applying the above principle, an average particle diameter (hereinafter, volume average particle diameter will be referred to as "average particle diameter") of the water-insoluble colorant is measured. When the measured value is close to the average primary particle diameter that is obtained from the TEM observation, it means that the particles in a liquid are in mono dispersion (the situation in which particles are neither bonding nor aggregating to each other). In the case where the above two values are a little separated from each other, it means some of the primary particles of the water-insoluble colorant form the secondary particle state (aggregation state) depending on the degree.

Thus, the combination of TEM observation of the primary particle diameter and measurement of the secondary particles by dynamic light-scattering method allows estimation of the dispersion state of the water-insoluble colorant.

According to the present invention, it was found that the average particle diameter of the water-insoluble colorant in dispersion medium, as determined by dynamic light-scattering method, was close to or not so separated from the average primary particle diameter obtained by TEM observation. In other words, it has been confirmed that a mono dispersion containing the water-insoluble colorant in a dispersion medium according to the present invention can be attained. On the other hand, the average particle diameter of the water-insoluble colorants in the dispersion medium, as determined by dynamic light-scattering method, is preferably 5 to 100 nm from the viewpoint of high color-developing efficiency when the dispersion is used as a recording liquid, more preferably 5 to 50 nm from the viewpoint of improvement in transparency, and particularly preferably 5 to 45 nm from the viewpoint of improvement in emission stability and expansion of the color-reproducing region when the dispersion is used as an inkjet recording liquid. The water-insoluble colorant in the dispersion medium according to the present invention has an average diameter close to that of the primary particles of the water-insoluble colorant even in the fine-sized region of 50 nm or less, preserves its high transparency even when dispersed and thus can be kept in favorable dispersion state.

Unless otherwise specified, the average particle diameter in the present invention means an average particle diameter measured by a dynamic light-scattering method as described above, and is a value measured with FPAR-1000 (trade name; manufactured by Otsuka Electronics Co., Ltd.).

It is preferable that a particle diameter distribution of the water-insoluble colorant dispersed in a dispersion medium in the present invention is monodispersion. Monodisperse particles are advantageous because adverse influence owing to light-scatting at large-sized particles can be reduced. For example, when aggregate is formed by using the dispersion at printing, recording, or the like, the mono dispersion has advantages to control of a filling form of the formed aggregate or the like. As an indicator that can be utilized to evaluate dispersibility of the dispersion (hereinafter, also referred to simply as "indicator of monodispersibility"), for example, use can be made of a difference between the diameter ($D_{90}$) of particles that occupy 90% by number and the diameter ($D_{10}$) of particles that occupy 10% by number of the total particle numbers, in the following integral equation of the particle diameter distribution function, with respect to the average particle diameter that is obtained according to the dynamic light-scattering method:

$$dG = f(D) \times d(D)$$

wherein G represents the number of particles, and D represents a primary particle diameter. In the present invention, the above difference between the size ($D_{90}$) and the size ($D_{10}$) is preferably 45 nm or less from the viewpoint of high color-developing efficiency when the dispersion is used as a recording liquid, and more preferably from 1 nm to 30 nm from the viewpoint of improvement in transparency, and especially preferably from 1 nm to 20 nm from the viewpoint of improvement in emission stability and expansion of the color-reproducing region when the dispersion is used as an inkjet recording liquid.

In the present invention, the values measured by the dynamic light-scattering method described above are used as an indicator of the monodispersibility described above, unless otherwise specified.

In the dispersion of the present invention, fine particles of the water-insoluble colorant are dispersed in a medium containing water. In one embodiment, when a peak intensity of light absorbance in the visible light wavelength region (for example, about 380 nm to about 700 nm) is 1, the light-scattering intensity is preferably 30,000 cps or less. This means that even though the particles contain the water-insoluble colorant in such an amount that a peak intensity of light absorbance in the visible light wavelength region becomes 1, the light-scattering intensity is as low as 30,000 cps or less. When the light-scattering intensity is low, high transparency can be recognized in the above dispersion, or a recording liquid in which the dispersion is used.

Further, the water-insoluble colorant in the dispersion according to the present invention preferably has a crystalline structure. Owing to the fact that it has a stable crystalline structure, the dispersion according to the present

invention can be improved in durability (heat resistance, light fastness, chemical resistance and others), when used, for example, as a recording liquid.

[Definition of crystallite diameter]

Measurement and calculation of a crystallite diameter are not limited. The phrase "the water-insoluble colorant has a crystalline structure" used in the present invention means that when the water-insoluble colorant contained in a dispersion is subjected to a powder X-ray diffraction analysis, the results of analysis do not meet any one of the following (i) and (ii):

(i) A halo that is specific to amorphous (non-crystalline) substance is observed.
(ii) The crystallite diameter that is determined by the measuring method described below is less than 20 Å, or the substance is supposed to be amorphous.

In the present invention, the crystallite diameter is measured and calculated as follows:
First, X-ray diffraction analysis is performed by using Cu-K$\alpha$1 ray. Thereafter, in the 2$\theta$ range of 4 degrees to 70 degrees, a half width of a peak that shows the maximum intensity or a peak that has a sufficiently large intensity and can be discriminated from a peak(s) adjacent thereto, is measured. Then, the crystallite diameter is calculated according to the following Scherrer's equation:

$$D = K \times \lambda / (\beta \times \cos\theta) \qquad \text{Scherrer's equation}$$

wherein D represents a crystallite diameter (Å, a size of crystallite), represents a measuring X-ray wavelength (Å), $\beta$ represents an extent (radian) of a diffraction line dependent on a diameter of the crystal, $\theta$ represents a Bragg angle (radian) of the diffraction line, and K represents a constant which is variable depending on the constant of $\beta$ and D.
Generally, it is known that when a half width $\beta/2$ is used in place of $\beta$, K equals 0.9. Further, since the wavelength of Cu-K$\alpha$1 ray is 1.54050 Å, the crystallite diameter D in the present invention is calculated according to the following equation:

$$D = 0.9 \times 1.54050 / (\beta/2 \times \cos\theta)$$

In this case, when a peak of the spectrum obtained by the measurement is so broad that a half width of the peak is difficult to make out, it is assumed that the crystallite diameter is less than 20 Å (fine crystalline state) or the substance is in an amorphous state (non-crystalline).
The water-insoluble colorant in the dispersion according to the present invention preferably has a crystalline structure, and the crystallite diameter is preferably 20Å or more and 500Å or less, more preferably 20Å or more and less than 400Å, and particularly preferably 20Å or more and less than 350Å from the viewpoint of satisfying both of light fastness and transparency. In addition, the water-insoluble colorant particularly preferably has an average primary particle diameter not larger than that of the water-insoluble colorant, as determined by TEM observation described above, and a crystallite diameter almost the same as the average primary particle diameter above for preservation of the transparency of the dispersion and for obtaining favorable light fastness.
In the present invention, it is preferable to use a dispersion containing water, fine particles of a water-insoluble colorant and the specific polymer compound, as described above, aggregate the fine particles of the water-insoluble colorant into redispersible agglomerates (flock or soft aggregates), and separate the agglomerates from the medium. It is further preferable to impart the agglomerates redispersibility and release (deaggregate) the particles from the aggregated condition so as to be dispersed into a redispersion medium. Accordingly, it is possible to replace the dispersion medium to another desired dispersion medium. For example, it is possible, by using a medium containing a particular component as the redispersion medium, to impart the dispersion after redispersion with properties improving ink properties. In particular, the polymer compound having a constitutional unit represented by formula (1) or (2) shows its effect at the time of this dispersion medium replacement. Including some presumption, it is considered that the specific ring structure group interacts with the water-insoluble colorant molecule so as to make a special adsorption state. Accordingly, it is presumed that the specific polymer compound suitably remains on the particle surface or in the particles without being released therefrom, and provides the ink compositions containing a hydrophobic organic solvent described later with favorable dispersion stability.

In the present specification, the above-described aggregation which possesses a re-dispersible property may be referred to as agglomeration, distinguished from strong aggregation not having re-dispersible property. Particularly, these properties can be explained as follows:

<Aggregation (hard aggregation)>

For example, primary particles are adhered each other at their crystalline surfaces as the crystal growth. The grown particle can not consequently be separated, unless otherwise the particle is broken.

<Agglomerate>

For example, particles are adhered at the tip or edge and the grown particle can be separated without broken. Flocculate, such as a soft aggregation of pigment particles spontaneously aggregated in the dispersion liquid is involved in the meaning of the term "Agglomerate". Such agglomerates may be referred to as flock(s). It is noted that the above described states, in overall, may be referred to as merely aggregation when it is not necessary to distinguish them.

The step of aggregating the particles of the water-insoluble colorant into redispersible agglomerates and separating the agglomerates from the medium and the step of redispersing the aggregates (agglomerates) by releasing the particles from the aggregation state, in the method of producing the dispersion according to the present invention will be described in detail.

As described in detail below, it is preferable to treat the liquid mixture containing the precipitated water-insoluble colorant particles with acid, to treat the dispersion preferably by adding an acid to the liquid mixture when forming aggregates, thereby to form particle aggregates. The acid-using treatment preferably includes steps of aggregating the particles with an acid, separation of the resultant aggregate from a solvent (dispersing medium), concentration, solvent removal and desalting (deacidification). By making a system acidic, it enables to reduce electrostatic repulsion of particles owing to a hydrophilic portion of the acid, and to aggregate the particles.

As the acid that is used in the aggregation of particles, any acid may be used so long as the compound is able to make hardly-precipitating fine-particles in the aqueous dispersion aggregate in a form such as slurry, paste, powder-like, granular, cake-like (bulk), sheet-like, short (discontinuous) fiber-like or flake-like form, and able to efficiently separate the resultant aggregate from a solvent according to an ordinary separation method. As the acid, it is more preferred to use an acid that forms a water-soluble salt with alkali. It is more preferable that the acid itself has a high solubility to water. In order to conduct desalting as efficiently as possible, it is preferable that the amount of acid used is as small as possible so long as the particles aggregate in the amount of the acid. Examples of the acid include hydrochloric acid, sulfuric acid, nitric acid, acetic acid, phosphoric acid, trifluoroacetic acid, dichloroacetic acid, and methane sulfonic acid. Of these acids, hydrochloric acid, acetic acid, and sulfuric acid are particularly preferable. An aqueous dispersion of colorant particles that has been processed with the acid so as to be easily separable can be easily separated by using a centrifugal separator, a filter, a slurry liquid-solid separator or the like. At this time, a degree of desalting or solvent removal can be controlled by adding dilution water, or by increasing frequency of decantation and washing. Regarding the aggregation method, inorganic compounds such as alum or so and polymer aggregation agents may be used in combination.

The thus-obtained aggregate can be used as a paste or slurry as it is, each of which has high water content. If necessary, the aggregate can also be used as fine powder that is obtained by drying the paste or slurry according to a drying method such as a spray-dry method, centrifugal separation drying method, a filter drying method, or a freeze-drying method.

As the re-dispersion treatment, there can be exemplified an alkali treatment. Namely, it is preferred to neutralize the particles aggregated with using the acid, with alkali, and then to re-disperse the particles into water or the like with maintaining a primary particle diameter at the time of deposition of the particles. Since desalting and solvent removal have been already conducted, a concentrated-base of aqueous dispersion containing a little impurity can be obtained. As the alkali used herein, any alkali can be used, so long as they act as a neutralizing agent for a dispersant having an acidic hydrophilic portion and enhance solubility to water. Specific examples of the alkali include various kinds of organic amines such as aminomethylpropanol, dimethylaminopropanol, dimethylethanolamine, ditehyltriamine, monoethanolamine, diethanolamine, triethanolamine, butyldiethanolamine, and morpholine; alkali metal hydroxides such as sodium hydroxide, lithium hydroxide, and potassium hydroxide; and ammonia. They may be used solely or in a combination of two or more compounds.

The amount of the alkali used is not particularly limited, so long as it is within the range in which the aggregated particles can be re-dispersed stably in water. However, when the dispersion is used for end use such as a printing ink or inkjet printer ink, the alkali sometimes causes corrosion of various kinds of parts. Therefore, it is preferred to use the alkali in such an amount that pH is within the range of 6 to 12, and more preferably from 7 to 11.

Further, in accordance with the dispersant that is used in the time of deposition of particles, a method different

from the above alkali treatment may be used. Examples of the method include a re-dispersion treatment using the low molecular dispersant or polymer dispersant described above. At this time, means for a dispersion treatment that are known from the past may be used. For example, it is possible to use a dispersing machine such as sand mill, bead mill, ball mill, and dissolver, or an ultrasonic treatment. These re-dispersion treatments may be used in combination with the above alkali treatment.

When the aggregated particles are re-dispersed, re-dispersion can be easily performed by adding a water-soluble organic solvent as a medium for the re-dispersion. The organic solvent usable is not particularly limited. Specific examples of the organic solvent include lower alcohols such as methanol, ethanol, n-propanol, isopropanol, n-butanol, isobutanol, and tert-butanol; aliphatic ketones such as acetone, methylethylketone, methylisobutylketone, and diacetone alcohol; ethylene glycol, diethylene glycol, triethylene glycol, glycerol, propylene glycol, ethylene glycol monomethyl or monoethyl ether, propylene glycol monomethyl ether, dipropylene glycol methyl ether, tripropylene glycol methyl ether, ethylene glycol phenyl ether, propylene glycol phenyl ether, diethylene glycol monomethyl or monoethyl ether, diethylene glycol monobutyl ether, triethylene glycol monomethyl or monoethyl ether, N-methylpyrrolidone, 2-pyrrolidone, dimethylformamide, dimethylimidazolidinone, dimethylsulfoxide, and dimethylacetoamide. These solvents may be used singly or in a combination of two or more compounds. When colorant particles are re-dispersed to prepare an aqueous dispersion thereof, the water content is preferably in the range of 99 to 20% by mass, and more preferably from 95 to 30% by mass of the aqueous dispersion respectively. The content of the water-soluble organic solvent is preferably in the range of 50 to 0.1% by mass, and more preferably from 30 to 0.05% by mass of the aqueous dispersion respectively.

When water, the above-described alkali and water-soluble organic solvent are added to the aggregated particles, if necessary, a stirrer, a mixer, a dispersing machine (such as a sand mill, a beads mill, a ball mill, a dissolver) or an ultrasonic dispersing machine may be used. When a paste or slurry of a water-insoluble colorant which is high in water content is used, addition of water is unnecessary. Further, heating, cooling, distillation or the like may be conducted for the purpose of enhancing efficiency of re-dispersion and another purpose of removing unnecessary water-soluble organic solvent, or an excessive alkali or the like.

The method of preparing the recording liquid (hereinafter, also referred to as "ink composition") according to the present invention is not particularly limited, and, it may be prepared, for example, by mixing components such as a specific polymer compound, surfactant, and aqueous solvent, so as to be uniformly dissolved or dispersed, during aggregating the dispersion according to the present invention into the soft aggregation and subsequent redispersion, as described above. It is preferable that the recording liquid of the present invention contains the above water-insoluble colorant in an amount of 0.1% by mass to 15% by mass of the recording liquid. When an excessive amount of polymer compounds or other additives are contained in the prepared ink, these materials may be properly removed according to a method such as centrifugal separation and dialysis, thereby to re-prepare the ink composition. The recording liquid of the present invention may be used alone. Alternatively, the recording liquid may be combined with another ink to prepare an ink set of the present invention.

A water-soluble solvent is preferably used as a component for the ink composition, specifically as an anti-drying agent, a wetting agent, or a penetration-accelerating agent. In particular, in the case of an aqueous ink composition for use in the ink-jet recording system, a water-soluble organic solvent is preferably used as an anti-drying agent, a wetting agent, or a penetration-accelerating agent. An anti-drying agent or a wetting agent is used for prevention of clogging of nozzle due to inkjet ink dried in the ink-ejecting opening of the nozzle. A water-soluble organic solvent having a vapor pressure lower than water is preferable as the anti-drying agent or the wetting agent. Further, a water-soluble organic solvent is preferably used as a penetration-accelerating agent for better penetration of the ink composition (in particular, inkjet ink composition) into paper.

In the present invention, the above-mentioned water-soluble solvent preferably contains a hydrophobic solvent (preferably hydrophobic organic solvent) having an SP value of 27.5 or less in an amount of 90% by mass or more and a compound represented by the following formula (III), for the purpose of prevention of curling. The component of the "water-soluble solvent having an SP value of 27.5 or less" and the "compound represented by formula (III)" may be identical with each other. The solubility parameter (SP value) of the water-soluble solvent according to the present invention is a value defined as the square root of the molecular cohesion energy, and can be determined by the method described in R. F. Fedors, Polymer Engineering Science, 14, p.147 (1967), and the value is used in the present invention.

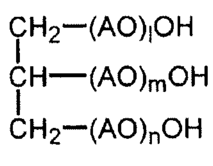

Formula (III)

In formula (III), 1, m, and n each independently represent an integer of 1 or more, and 1 + m + n = 3 to 15. A too-small l + m + n value leads to low curling resistance, while a too-large value leads to deterioration in ejection efficiency. In particular, the value l + m + n is preferably 3 to 12, more preferably 3 to 10. In formula (III), AO represents an ethyleneoxy group or a propyleneoxy group, and a propyleneoxy group is particularly preferable. The AOs in the (AO)l, (AO)m, and (AO)n may be the same as or different from each other.

Hereinafter, examples of the water-soluble solvents having an SP value of 27.5 or less and the compounds represented by formula (III) will be listed respectively with SP values (in parenthesis). However, the present invention is not limited to these examples.

Diethylene glycol monoethyl ether (22.4)
Diethylene glycol monobuthyl ether (21.5)
Triethylene glycol monobuthyl ether (21.1)
Dipropylene glycol monomethyl ether (21.3)
Dipropylene glycol (27.2)

(III-1) 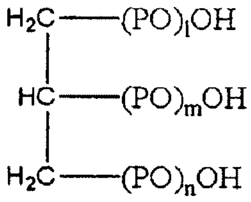 l+m+n=3 (26.4) P0= Propyleneoxy

(III-2) 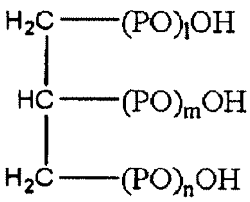 l+m+n=4 (24.9) P0= Propyleneoxy

(III-3) 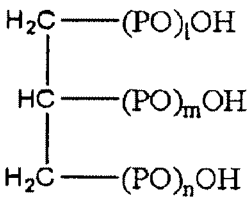 l+m+n=5 (23.9) P0= Propyleneoxy

(III-4) 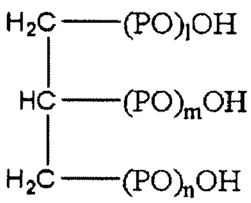 l+m+n=6 (23.2) P0= Propyleneoxy

(III-5) 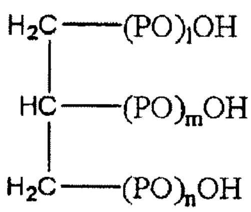 l+m+n=7 (22.6) P0= Propyleneoxy

$nC_4H_9O(AO)_4$-H (AO is EO or PO, the ratio of EO:PO=1:1) (20.1)
$nC_4H_9O(AO)_{10}$-H (AO is EO or PO, the ratio of EO:PO=1:1) (18.8)
$HO(A'O)_{40}$-H (A'O is EO or PO, the ratio of EO:PO=1:3) (18.7)
$HO(A''O)_{55}$-H (A"O is EO or PO, the ratio of EO:PO=5:6) (18.8)
$HO(PO)_3$-H(24.7)
$HO(PO)_7$-H(21.2)
1,2-hexanediol (27.4)

In the present invention, EO and PO represent an ethyleneoxy group and a propyleneoxy group, respectively.

The rate (content) of the compound represented by formula (III) in the water-soluble solvent is preferably 10% or more, more preferably 30% or more, and still more preferably 50% or more. There is no particular problem generated, even if the value is higher. The above range is preferable, since a value in the range above enables further improvement of both ink stability and ejection efficiency, and favorable prevention of curling.

Further, in the present invention, another solvent may be used in combination, to an extent that the ratio of the solvent having an SP value of 27.5 or less is not less than 90%.

Examples of the water-soluble organic solvent usable in combination include alkanediols (polyvalent alcohols) such as glycerol, 1,2,6-hexanetriol, trimethylolpropane, ethylene glycol, propylene glycol, diethylene glycol, triethylene glycol, tetraethylene glycol, pentaethylene glycol, dipropylene glycol, 2-butene-1,4-diol, 2-ethyl-1,3-hexanediol, 2-methyl-2,4-pentanediol, 1,2-octanediol, 1,2-hexanediol, 1,2-pentanediol, and 4-methyl-1,2-pentanediol; sugars such as glucose, mannose, fructose, ribose, xylose, arabinose, galactose, aldonic acid, glucitol (sorbit), maltose, cellobiose, lactose, sucrose, trehalose and maltotriose; sugar alcohols; hyaluronic acids; so-called solid wetting agents such as urea compounds; alkyl alcohols having 1 to 4 carbon atoms such as ethanol, methanol, butanol, propanol, and isopropanol; glycol ethers such as ethylene glycol monomethyl ether, ethylene glycol monoethyl ether, ethylene glycol monobutyl ether, ethylene glycol monomethyl ether acetate, diethylene glycol monomethyl ether, diethylene glycol monoethyl ether, diethylene glycol mono-n-propyl ether, ethylene glycol mono-iso-propyl ether, diethylene glycol mono-iso-propyl ether, ethylene glycol mono-n-butyl ether, ethylene glycol mono-t-butyl ether, diethylene glycol mono-t-butyl ether, 1-methyl-1-methoxybutanol, propylene glycol monomethyl ether, propylene glycol monoethyl ether, propylene glycol mono-t-butyl ether, propylene glycol mono-n-propyl ether, propylene glycol mono-iso-propyl ether, dipropylene glycol monomethyl ether, dipropylene glycol monoethyl ether, dipropylene glycol mono-n-propyl ether, and dipropylene glycol mono-iso-propyl ether; 2-pyrrolidone, N-methyl-2-pyrrolidone, 1,3-dimethyl-2-imidazolidinone, formamide, acetamide, dimethylsulfoxide, sorbit, sorbitan, acetin, diacetin, triacetin, sulfolane, and the like, and these solvents may be used alone or in combination of two or more.

A polyvalent alcohol is useful as the anti-drying or wetting agent, and examples thereof include glycerol, ethylene glycol, diethylene glycol, triethylene glycol, propylene glycol, dipropylene glycol, tripropylene glycol, 1,3-butanediol, 2,3-butanediol, 1,4-butanediol, 3-methyl-1,3-butanediol, 1,5-pentanediol, tetraethylene glycol, 1,6-hexanediol, 2-methyl-2,4-pentanediol, polyethylene glycol, 1,2,4-butanetriol, 1,2,6-hexanetriol, and the like. These alcohols may be used alone or in combination of two or more.

A polyol compound is favorable as the penetrant (penetration-accelerating agent), and examples of the aliphatic diols include 2-ethyl-2-methyl-1,3-propanediol, 3,3-dimethyl-1,2-butanediol, 2,2-diethyl-1,3-propanediol, 2-methyl-2-propyl-1,3-propanediol, 2,4-dimethyl-2,4-pentanediol, 2,5-dimethyl-2,5-hexanediol, 5-hexene-1,2-diol, 2-ethyl-1,3-hexanediol and the like. In particular, 2-ethyl-1,3-hexanediol and 2,2,4-trimethyl-1,3-pentanediol can be mentioned as favorable examples.

The water-soluble solvent for use in the recording liquid according to the present invention may be used alone or in combination of two or more. The content of the water-soluble solvent in the entire ink composition is preferably 1 mass% or more and 60 mass% or less, more preferably 5 mass% or more and 40 mass% or less, and particularly preferably 10 mass% or more and 30 mass% or less, for ensuring stability and ejection reliability.

The amount of water added to the recording liquid according to the present invention is not particularly limited, but, preferably 10 mass% or more and 99 mass% or less, more preferably 30 mass% or more and 80 mass% or less, and still more preferably 50 mass% or more and 70 mass% or less, in the entire ink composition, for ensuring stability and ejection reliability.

The recording liquid of the present invention may be used in various image-forming methods and apparatuses, such as a variety of printing methods, inkjet process, and electrophotography. Imaging can be performed according to an image-forming method using the apparatuses. Further, according to the inkjet process, fine patterns may be formed, or dosage of drugs may be conducted.

It is preferable that the recording liquid of the present invention is used as an inkjet recording liquid. It is also preferred to prepare an ink set using the inkjet recording liquid. It is also preferred to prepare a printed article having an image recorded by use of the recording liquid or the ink set of the present invention, with a provider that has a function to provide the recording liquid to a recording medium. It is more preferred to prepare a printed article having an image with a shading nuance adjusted by a provider that has a function to adjust an applying amount or concentration of the

recording liquid. It is also preferable that the recording liquid or ink set is used in an image-forming method that includes a process of recording an image by providing the recording liquid to a recording medium (material). Further, according to the present invention, it is also possible to produce an image-forming apparatus having the means for recording an image by using the above recording liquid or ink set and providing the recording liquid to a recording medium.

The dispersion of the present invention having excellent properties can realize an image recording of high quality and high vividness when the dispersion is used as ink. In addition, it can be suitably used as a material for forming color filters.

In the dispersion of the present invention, even though a concentration of the dispersion is high, the viscosity of the dispersion can be kept at low level. For example, when the dispersion is used as a recording liquid, if the viscosity of the dispersion is at low level even though a concentration is high, the freedom degree of the kind and addition amount of additives that can be used in the recording liquid is increased. Accordingly, the dispersion according to the present invention can be used favorably as a recording liquid.

According to the present invention, it is possible to provide a water-insoluble colorant dispersion which has very fine primary particles of the water-insoluble colorant fine particles, and high dispersion stability and excellent storage stability, and which can produce high-precision printed articles with a high color density.

The dispersion of the present invention has the fine particles of the water-insoluble colorant finely divided even to a nanometer size, and maintains satisfactory dispersion stability over time. The dispersion also has very high storage stability (stability over time) and maintains the desired performance so that the dispersion can be stored over a long time. The dispersion of the present invention is also particularly suitable as a material for preparing an ink containing a hydrophobic organic solvent. The dispersion also exhibits an effect of suppressing curling of paper after droplet shot, which is characteristic to the ink, while overcoming the defects, and offers excellent operating effects of maintaining high dispersion stability. Furthermore, a recording liquid making use of the dispersion of the present invention is excellent in transparency, light fastness and ejecting efficiency, and can produce high-precision printed articles with a high color density. Thus, the recording liquid can be applied to high-performance ink sets, printed articles, image-forming methods and image-forming apparatuses.

The present invention will be described in more detail based on the following examples, but the invention is not intended to be limited thereto. In the following examples, the terms "part(s)" and "%" are values by mass, unless otherwise specified.

## EXAMPLES

In the following examples, average particle diameter of each of the dispersions according to the dynamic scattering method was measured by using FPAR-1000 (trade name, manufactured by Otsuka Electronics Co, Ltd.) after dilution with ion-exchange water. At this time, inputting 1.333 as the refractive index of ion-exchange water as the dispersion medium, a volume-average particle diameter was measured. Further, evaluation of the average particle diameter from observation with the transmission electron microscope (TEM) was conducted by adding dropwise a diluted dispersion onto a Cu 200 mesh to which a carbon film was attached, and then drying, and thereafter measuring the major axis of each of 300 particles that were isolated and not piled up each other, from images of the particles photographed to 100,000 times using TEM (1200EX, trade name, manufactured by JEOL Ltd.), and then calculating an average value as an average particle diameter. Hereinafter, the average particle diameter calculated from TEM observation is described as a TEM average particle diameter.

Synthesis of monomer (C), (D)

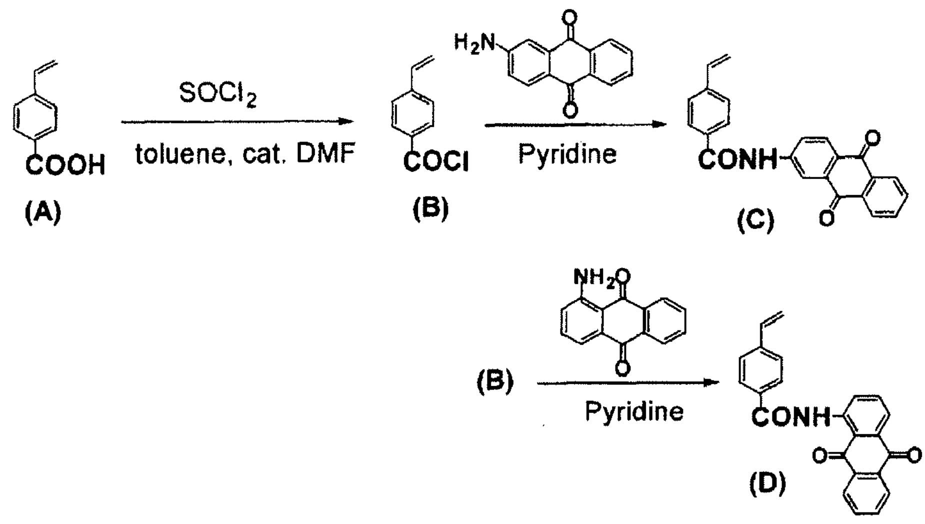


Synthesis of monomer (C)

To a 200-ml three-neck flask, 16.6 g (0.112 mol) of 4-vinylbenzoic acid, 80 ml of toluene, and two drops of N, N-dimethylformamide were added. While stirring the mixture under room temperature, 9.7 ml (0.14 mol) of thionyl chloride was added to the mixture, followed by stirring the resultant under heating at 60°C for 2 hours. Then, the temperature inside the reaction system was cooled down to around 40°C, and the toluene and the excess thionyl chloride were removed under the reduced pressure, to obtain Compound (B). Without refining compound (B) further, it was used in the next reaction immediately.

To a 500-ml three-neck flask, 22.5 g (0.101 mol) of 2-aminoanthraquinone and 110 ml of pyridine were added. While stirring the resultant under cooling by ice, the above compound (B) was dropped down slowly through a dropping funnel. After stirring the resultant under cooling by ice for 30 minutes, it was further stirred under heating at 60°C for 3 hours. Then, it was cooled down to the room temperature, and while stirring the resultant reaction mixture, water was added thereto. The thus-generated crude crystals were separated by filtration, and then washed by pouring water and methanol. Subsequently, the collected crude crystals were entered into a 500-ml three-neck flask, and added with 500 ml of methanol, and the resultant mixture was stirred under heating at 60°C. Afterwards, the crystals were separated by filtration, washed by methanol, and dried, to obtain 21.5 g of Compound (C) (Yield: 75 %). The results of NMR measurement of the compound (C) are shown below.

$^1$H-NMR (300MHz, $CDCl_3$) $\delta$=5.48 (br.d, 1H, J=12.0Hz), 6.07 (br.d, 1H, J=17.4Hz), 6.89 (br.dd, 1H, J=12.0, 17.4Hz), 7.78 (br.d, 2H, J=8.4Hz), 7.94-8.05 (m, 4H), 8.08(br.d, 2H, J=8.4Hz), 8.19-8.24(m, 1H), 8.29- 8.34 (m, 1H), 9.19(dd, 1H, J=1.5, 6.9Hz), 13.1(br.s, 1H).

Synthesis of monomer (D)

In the same manner as the synthesis of monomer (C) described above, monomer (D) was prepared using 22.5 g (0.101 mol) of 1-aminoanthraquinone, and thereby obtained 20.2 g of Monomer (D) (yield: 71%). The results of NMR measurement of the compound (D) are shown below.

$^1$H-NMR (300MHz, $CDCl_3$) $\delta$=5.46 (br.d, 1H, J=12.0Hz), 6.04 (br.d, 1H, J=17.7Hz), 6.92 (br.dd, 1H, J=12.0, 17.7Hz), 7.72 (br.d, 2H, J=9.0Hz), 7.92-8.03 (m, 2H), 8.14 (br.d, 2H, J=9.0Hz), 8.34 (br.d, 2H, J=9.0Hz), 8.49 (br.d, 2H, J=9.0Hz), 8.80 (br.d, 2H, J=9.0Hz), 10.1(br.s, 1H).

(Synthesis of Polymer Compound)

Synthesis of styrene/methacrylic acid copolymer St/MAA

To a 500-ml three-neck flask, 75 g of dimethylsulfoxide was added, and under a nitrogen gas flow, while heating the liquid at an inner temperature of 80°C, a mixed solution prepared by allowing 70 g (0.67 mol) of styrene, 30 g (0.35 mol) of methacrylic acid (MAA), 1.77 g (7.67 mmol) of V-601 (trade name, manufactured by Wako Pure Chemical

industries, Ltd., dimethyl 2,2'-azobis(2-methyl propionate)), and 150 g of dimethylsulfoxide was dropped thereto over a period of 2 hours. After completion of the dropping, the resultant was stirred under heating at 80°C for 2 hours as it was, and then, a solution of 0.88 g (3.8 mmol) of V-601 (trade name) dissolved in 2 g of dimethylsulfoxide was further added, followed by stirring at 90°C for 1 hour. 148 g of dimethylsulfoxide was added to the resultant mixture, and it was cooled to room temperature. 1 L of methanol and 1 L of water were placed in a 5-L stainless steel bucket, and while stirring the mixture at room temperature, the thus-obtained styrene/methacrylic acid copolymer mixture was added gradually thereto dropwise.
The white powder obtained was collected by filtration, to give 67.5 g of a styrene/methacrylic acid copolymer St/MAA (acid value: 178, mass-average molecular weight: 33,000).

Polymer compound 1

To a 200-ml three-necked flask, 8.9 g (0.085 mol) of styrene, 5.0 g (0.014 mol) of monomer (C), 6.1 g (0.071 mol) of methacrylic acid, and 45.7 g ofN-methylpyrrolidone were added. While heating the mixture at an internal temperature of 80°C under nitrogen stream, a mixed solution of 0.39 g (1.7 mmol) of V-601 (trade name) and 0.5 g ofN-methylpyrrolidone was added thereto. The mixture was stirred as it was under heating at 80°C. A mixed solution of 0.39 g (1.7 mmol) of V-601 (trade name) and 0.5 g of N-methylpyrrolidone was added thrice every 2 hours, and the mixture was stirred at 80°C additionally for 2 hours and then cooled to room temperature. 600 ml of methanol and 600 ml of water were placed in a 3-L stainless steel bucket, and while stirring the mixture therein, the thus-obtained styrene/monomer (C)/methacrylic acid copolymer mixture was added dropwise thereto gradually. The powder obtained was collected by filtration, to give 10.5 g of Polymer compound 1 (acid value: 185, mass-average molecular weight: 20,000).

Polymer compound 2

A copolymer of styrene/monomer (D)/methacrylic acid (acid value: 182, molecular weight: 15,000) was obtained from styrene monomer, monomer (D), and methacrylic acid in the same manner as the synthesis of Polymer compound 1.

Polymer compound 3

To a 200-ml three-necked flask, 8.9 g (0.085 mol) of tert-butyl styrene, 5.0 g (0.014 mol) of monomer (D), 6.1 g (0.071 mol) of methacrylic acid, and 45.7 g ofN-methylpyrrolidone were added. While heating the mixture at an internal temperature of 80°C under nitrogen stream, a mixed solution of 0.39 g (1.7 mmol) of V-601 (trade name) and 0.5 g ofN-methylpyrrolidone was added thereto. The mixture was stirred as it was under heating at 80°C. A mixed solution of 0.39 g (1.7 mmol) of V-601 (trade name) and 0.5 g of N-methylpyrrolidone was added thrice every 2 hours, and the mixture was stirred at 80°C additionally for 2 hours and then cooled to room temperature. 600 ml of methanol and 600 ml of water were placed in a 3-L stainless steel bucket, and while stirring the mixture therein, the thus-obtained tert-butyl styrene/monomer (D)/methacrylic acid copolymer mixture was added dropwise thereto gradually. The powder obtained was collected by filtration, to give 11.0 g of Polymer compound 3 (acid value: 154, mass-average molecular weight: 34,000).

Example 1

(Preparation of Pigment Dispersion A)

6.88 g of C.I. Pigment Red 122 (hereinafter, abbreviated to PR122), 6.32 g of C.I. Pigment Violet 19 (hereinafter, abbreviated to PV19), 6.6 g of polymer compound D-1 (acid value 200 mg KOH/g, Mw = 40000) having M-4 shown below in the composition, 140 g of dimethylsulfoxide, and 40.6 g of tetramethylammonium hydroxide (hereinafter, abbreviated to $Me_4NOH$, 25% methanol solution) as an alkali were mixed and heated under stirring at 40°C to completely dissolve the components. Thus, a pigment solution was obtained, which was dark blue violet in color.

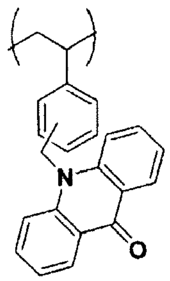

M-4

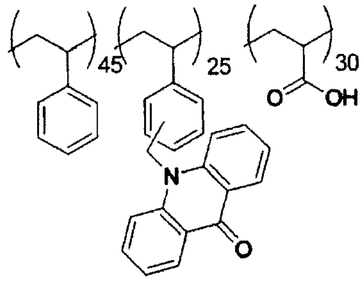

D-1

2000 g of ion-exchange water was placed in a 5-L beaker. While stirring the water on ice bath, the above pigment solution sucked up with a Terumo syringe (trade name: SS-50ESZ) and a Terumo needle (trade name: NN-1838R, diameter: 1.20 mm × length 38 mm) both manufactured by TERUMO CORPORATION was discharged rapidly thereto, to give a pigment dispersion. The pigment dispersion was stirred, as cooled by ice, for 30 minutes, and transferred into a 2-L three-necked flask. The dispersion was heated at an external temperature set to 50°C for 6 hours. The pigment dispersion was then cooled to room temperature, adjusted to a pH of 7.0 by adding dilute hydrochloric acid dropwise, allowing aggregation of the pigment particles in the pigment dispersion, to give agglomerates. The agglomerates obtained were filtered under reduced pressure through a membrane filter with an average pore size of 0.2 μm and washed twice with ion-exchange water, to give a agglomerate pigment powder a. Then, 200 ml of acetone was added to the collected pigment powder a, and the mixture was stirred at room temperature for 1 hour and filtered again through a membrane filter with an average pore-size of 0.2 μm under reduced pressure. Then, the pigment powder a was washed again with ion-exchange water to give a dispersion powder b of pigment particles that were desalted and solvent-removed.

Next, ion-exchange water and 1N (normality) sodium hydroxide solution were added drop by drop to the powder, until the pigment content became 10%, and the mixture was ultrasonicated in an ultrasonic homogenizer US-150T (trade name) manufactured by NIHONSEIKI KAISHA LTD., to give a high-concentration Pigment Dispersion A adjusted to pH 9.0.

(Preparation of Pigment Dispersions B to D, and G)

Pigment Dispersions B to D and G were obtained in the same manner, except that the pigments and dispersants used in the preparation of the Pigment Dispersion A were changed as indicated in Table 1 shown below. In the Table 1, PR represents Pigment Red, and PV represents Pigment Violet.

(Preparation of Pigment Dispersions E, F, and L)

Pigment Dispersions E, F and L were obtained in the same manner, except that the pigments and dispersants used in the preparation of the Pigment Dispersion A were changed as indicated in Table 1 shown below, and the tetramethylammonium hydroxide used as an alkali was changed to a 40% methanol solution of benzyltrimethylammonium hydroxide and was added bit by bit until the pigments and the polymer compound completely dissolved. In the Table 1, PY represents Pigment Yellow, and PO represents Pigment Orange.

(Preparation of Pigment Dispersion H)

Pigment Dispersion H was obtained in the same manner, except that the pigment was changed to 13.2 g of PR122, and PV19 was not used in the preparation of the Pigment Dispersion A.

(Preparation of Pigment Dispersions I to K)

Pigment Dispersions I to K were obtained in the same manner, except that the pigments and dispersants used in the preparation of the Pigment Dispersion H were changed as indicated in Table 1 shown below, and the 25% methanol solution of tetramethylammonium hydroxide used as an alkali was added bit by bit until the pigments and the polymer compound completely dissolved.

(Preparation of Pigment Dispersions M and N)

Pigment Dispersions M and N were obtained in the same manner, except that the pigments and dispersants used in the preparation of the Pigment Dispersion H were changed as indicated in Table 1 shown below, and the tetramethylammonium hydroxide used as an alkali was changed to a 40% methanol solution of benzyltrimethylammonium hydroxide, and was added bit by bit until the pigments and the polymer compound completely dissolved.

(Preparation of Pigment Dispersion O)

Pigment Dispersion O was obtained in the same manner, except that the stirring of the pigment dispersion for 30 minutes under ice cooling and the heating at an externally set temperature of 50°C for 6 hours performed in the preparation of the Pigment Dispersion A were not carried out, and the stirring of the powder a of pigment soft aggregates using acetone was not carried out.

(Residual ratio of dispersant)

For the prepared Pigment Dispersions A to O, the powder of soft aggregates was washed with triethylene glycol monobutyl ether, subsequently separated by filtration, and dissolved in N-methylpyrrolidone. Then, the pigment purity was calculated from a UV absorption spectrum. The residual ratio of the dispersant contained in the pigment particles was determined from the difference between the mass ratio of the dispersant to the pigment (D/P ratio) obtained before the reaction and the D/P ratio obtained after the solvent washing. The dispersant was used at a proportion of 50% by mass relative to the total amount of the pigments. The results are shown in Table 1.

Table 1

| Pigment Dispersion | Pigment | Polymer compound | D/P ratio (amount to be charged) | D/P ratio (after solvent washing) | Residual rate of dispersant (mass %) | Remarks |
|---|---|---|---|---|---|---|
| A | PR122/PV19 | D-1 | 0.5 | 0.21 | 42 | This invention |
| B | PR122/PV19 | Polymer compound 1 | 0.5 | 0.30 | 60 | This invention |
| C | PR202/PV19 | Polymer compound 2 | 0.5 | 0.34 | 68 | This invention |
| D | PR122/PV19 | Polymer compound 3 | 0.5 | 0.38 | 76 | This invention |
| E | PY128/PY74 | Polymer compound 3 | 0.5 | 0.31 | 62 | This invention |
| F | PY128/PO13 | Polymer compound 3 | 0.5 | 0.32 | 64 | This invention |
| G | PR122/PV19 | St/MAA | 0.5 | 0.01 | 2 | Comparative example |
| H | PR122 | D-1 | 0.5 | 0.04 | 8 | Comparative example |
| I | PV19 | D-1 | 0.5 | 0.05 | 10 | Comparative example |
| J | PR122 | Polymer compound 3 | 0.5 | 0.19 | 38 | Comparative example |
| K | PV19 | Polymer compound 3 | 0.5 | 0.18 | 36 | Comparative example |
| L | PY128/PY74 | St/MAA | 0.5 | 0.02 | 4 | Comparative example |

(continued)

| Pigment Dispersion | Pigment | Polymer compound | D/P ratio (amount to be charged) | D/P ratio (after solvent washing) | Residual rate of dispersant (mass %) | Remarks |
|---|---|---|---|---|---|---|
| M | PY128 | Polymer compound 3 | 0.5 | 0.13 | 26 | Comparative example |
| N | PY74 | Polymer compound 3 | 0.5 | 0.15 | 30 | Comparative example |
| O | PR122/PV19 | D-1 | 0.5 | 0.21 | 42 | This invention |

As it is obvious from the results of Table 1, it was found that a dispersion which contains a conventional styrene/methacrylic acid copolymer as a dispersant (Pigment Dispersions G and L) or a dispersion which contains a single kind of pigment alone (Pigment Dispersions H to K, M and N), the D/P ratio obtained after organic solvent washing and residual ratio of the dispersant are low, and the dispersant is easy to elute into the ink. On the contrary, it was found that the residual ratio of each of the Pigment Dispersions A to F and O of the present invention is high, and the solvent resistivity has improved.

Example 2

(Preparation of Ink Composition)

Alkaline Ink Compositions A1 to O1 were obtained by using the Pigment Dispersions A to O prepared in Example 1 respectively. Each of the Pigment Dispersions, glycerol (SP value: 33.5; CLogP: -1.538), Acetylenol EH (trade name, manufactured by Kawaken Fine Chemicals Co., Ltd.) were mixed so as to make the concentration of each ingredient to set to 4 mass %, 30 mass %, and 1 mass % respectively, and ion-exchange water was added so as to adjust the concentration. Each of the resultant mixtures was ultrasonicated, to give Ink compositions A1 to O1.

(Evaluation of Storage Stability)

First, the average particle diameter by the dynamic light-scattering method (Mv) of each of the obtained Ink Compositions A1 to O1 was determined on the day of its preparation (fresh). Then, the average particle diameter by the dynamic light scattering (Mv) of each of these ink compositions was determined again, after they were stored under the heating condition of an external temperature adjusted to 60°C for 14 days.

Furthermore, the viscosity of the ink composition before and after the test of time lapse heating was measured similarly, in a constant-temperature state at 25°C using an E-type rotary viscometer (RE-80L, trade name, manufactured by TOKI SANGYO CO., LTD.).

The respective results are shown in Table 2.

Table 2

| Ink Composition | Pigment | Polymer compound | Particle diameter (Mv) (nm) | | Viscosity (mPa·s) | | Remarks |
|---|---|---|---|---|---|---|---|
| | | | Initial (fresh) | after a lapse of 14 days at 60°C | Initial (fresh) | after a lapse of 14 days at 60°C | |
| A1 | PR122/PV19 | D-1 | 26 | 27 | 4.6 | 4.7 | This invention |
| B1 | PR122/PV19 | Polymer compound 1 | 29 | 33 | 4.8 | 5.0 | This invention |
| C1 | PR202/PV19 | Polymer compound 2 | 25 | 29 | 4.6 | 4.7 | This invention |

(continued)

| Ink Composition | Pigment | Polymer compound | Particle diameter (Mv) (nm) | | Viscosity (mPa·s) | | Remarks |
|---|---|---|---|---|---|---|---|
| | | | Initial (fresh) | after a lapse of 14 days at 60°C | Initial (fresh) | after a lapse of 14 days at 60°C | |
| D1 | PR122/PV19 | Polymer compound 3 | 33 | 35 | 4.3 | 4.5 | This invention |
| E1 | PY128/PY74 | Polymer compound 3 | 35 | 37 | 4.3 | 4.6 | This invention |
| F1 | PY128/PO13 | Polymer compound 3 | 30 | 33 | 4.4 | 4.6 | This invention |
| G1 | PR122/PV19 | St/MAA | 27 | 46 | 6.0 | 11.2 | Comparative example |
| H1 | PR122 | D-1 | 37 | 49 | 4.4 | 6.6 | Comparative example |
| I1 | PV19 | D-1 | 27 | 44 | 4.5 | 6.7 | Comparative example |
| J1 | PR122 | Polymer compound 3 | 26 | 64 | 4.5 | 5.8 | Comparative example |
| K1 | PV19 | Polymer compound 3 | 24 | 55 | 4.4 | 5.8 | Comparative example |
| L1 | PY128/PY74 | St/MAA | 35 | 73 | 6.1 | 12.3 | Comparative example |
| M1 | PY128 | Polymer compound 3 | 27 | 50 | 4.4 | 6.6 | Comparative example |
| N1 | PY74 | Polymer compound 3 | 31 | 61 | 4.3 | 7.0 | Comparative example |
| O1 | PR122/PV19 | D-1 | 27 | 30 | 4.7 | 4.9 | This invention |

As it is obvious from the results of Table 2, it was found that when a hydrophobic solvent ink is produced using a dispersion which contains a conventional styrene/methacrylic acid copolymer as a dispersant (Pigment Dispersions G and L) or a dispersion which contains a single kind of pigment alone (Pigment Dispersions H to K, M and N), the particle diameter of the pigment fine particle increases considerably (Ink Compositions G1 to N1). On the contrary, it was found that the Pigment Dispersions A to F and O of the present invention have excellent stability over time even when produced into hydrophobic solvent inks (Ink Compositions A1 to F1 and O1).

Example 3

(Preparation of Ink Composition)

Alkaline Ink Compositions A2 to 02 were obtained by using the Pigment Dispersions A to O prepared in Example

1 respectively. Each of the pigment dispersions, triethylene glycol monobuthyl ether (manufactured by Wako Pure Chemical industries, Ltd., SP value: 22.1; CLogP: 0.569), Acetylenol EH (trade name, manufactured by Kawaken Fine Chemicals Co., Ltd.) were mixed so as to make the concentration of each ingredient to set to 4 mass %, 30 mass %, and 1 mass % respectively, and ion-exchange water was added so as to adjust the concentration. Each of the resultant mixture was ultrasonicated, to give Ink Compositions A2 to O2.

(Evaluation of Storage Stability)

First, the average particle diameter by the dynamic light-scattering method (Mv) of each of the obtained Ink Compositions A2 to 02 was determined on the day of its preparation (fresh). Then, the average particle diameter by the dynamic light scattering (Mv) of each of these ink compositions was determined again, after they were stored under the heating condition of an external temperature adjusted to 60°C for 14 days.

Furthermore, the viscosity of the ink composition before and after the test of time lapse heating was measured similarly, in a constant-temperature state at 25°C using an E-type rotary viscometer (RE-80L, trade name, manufactured by TOKI SANGYO CO., LTD.).

The respective results are shown in Table 3.

Table 3

| Ink Composition | Pigment | Polymer compound | Particle diameter (Mv) (nm) | | Viscosity (mPa·s) | | Remarks |
|---|---|---|---|---|---|---|---|
| | | | Initial (fresh) | after a lapse of 14 days at 60°C | Initial (fresh) | after a lapse of 14 days at 60°C | |
| A2 | PR122/PV19 | D-1 | 30 | 32 | 6.1 | 5.9 | This invention |
| B2 | PR122/PV19 | Polymer compound 1 | 28 | 31 | 6.2 | 6.3 | This invention |
| C2 | PR202/PV19 | Polymer compound 2 | 30 | 33 | 6.2 | 6.3 | This invention |
| D2 | PR122/PV19 | Polymer compound 3 | 29 | 30 | 5.8 | 5.9 | This invention |
| E2 | PY128/PY74 | Polymer compound 3 | 36 | 38 | 6.1 | 6.2 | This invention |
| F2 | PY128/PO13 | Polymer compound 3 | 31 | 32 | 6.1 | 6.0 | This invention |
| G2 | PR122/PV19 | St/MAA | 40 | unmeasurable | unmeasurable | unmeasurable | Comparative example |
| H2 | PR122 | D-1 | 38 | unmeasurable | 9.7 | unmeasurable | Comparative example |
| 12 | PV19 | D-1 | 36 | unmeasurable | 10.0 | unmeasurable | Comparative example |
| J2 | PR122 | Polymer compound 3 | 36 | 55 | 7.9 | 89 | Comparative example |
| K2 | PV19 | Polymer compound 3 | 35 | 56 | 8.1 | 9.2 | Comparative example |
| L2 | PY128/PY74 | St/MAA | 50 | unmeasurable | unmeasurable | unmeasurable | Comparative example |
| M2 | PY128 | Polymer compound 3 | 38 | 73 | 8.3 | 9.8 | Comparative example |
| N2 | PY74 | Polymer compound 3 | 35 | 81 | 8.0 | 10.3 | Comparative example |
| O2 | PR122/PV19 | D-1 | 32 | 40 | 6.4 | 6.9 | This invention |

As it is obvious from the results of Table 3, it was found that when a hydrophobic solvent ink is produced using a dispersion which contains a conventional styrene/methacrylic acid copolymer as a dispersant (Pigment Dispersions G and L) or a dispersion which contains a single kind of pigment alone (Pigment Dispersions H to K, M and N), aggregation occurs rapidly, and the particle diameter and the viscosity increase to unmeasurable values (Ink Compositions G2 to N2). On the contrary, it was found that the Pigment Dispersions A to F and O of the present invention has excellent stability over time even when produced into hydrophobic solvent inks, and thus have their stability dramatically improved (Ink Compositions A2 to F2 and 02).

(Observation by transmission electron microscope)

For the Ink Compositions A2 and H2 before and after the test of time lapse heating previously described, the ink which had been diluted was dropped onto a Cu 200 mesh to which a carbon film was attached, and then an observation was made under a transmission electron microscope (TEM) (magnification: 100,000 times). The results are shown in Fig. 1.

As it is obvious from the results of Fig. 1, the Ink Composition H2 of Comparative Example aggregated after a lapse of 14 days, so that the particle diameter of the pigment fine particles was increased. On the contrary, in the Ink Composition A2 of the present invention, the particle diameter did not change much even after a lapse of 14 days, and coarsening of the primary particle diameter of the pigment fine particles was suppressed. Thus, it was found that the ink had excellent stability over time. Therefore, it was found that the ink of the present invention had excellent stability over time, even though the ink used with a solvent having a low SP value in combination.

Example 4

(Measurement of optical density (OD))

Printing was performed using the Ink Compositions A1 to O1 prepared in Example 2 on plain paper which was a non-glossy medium, and the optical density (OD) of the obtained printed article was measured.

First, printing was performed with each of the Ink Compositions A1 to O1, using Xerox4024 paper (trade name, manufactured by Xerox Corp.) as an plain paper and using a color inkjet printer EM-930C (trade name, manufactured by SEIKO EPSON Corp.) at a printing mode of photo 720 dpi. Each of the samples printed on the plain paper was subjected to the measurement of optical density (O.D.) using GRETAG MACBETH SPECTROSCAN SPM-50 (trade name, manufactured by GRETAG Imaging, Inc. (US)). The results are shown in Table 4.

Table 4

| Ink Composition | Pigment | Polymer compound | Plain paper O.D. | Remarks |
|---|---|---|---|---|
| A1 | PR122/PV19 | D-1 | 1.41 | This invention |
| B1 | PR122/PV19 | Polymer compound 1 | 1.42 | This invention |
| C1 | PR202/PV19 | Polymer compound 2 | 1.43 | This invention |
| D1 | PR122/PV19 | Polymer compound 3 | 1.42 | This invention |
| E1 | PY128/PY74 | Polymer compound 3 | 1.45 | This invention |
| F1 | PY128/PO13 | Polymer compound 3 | 1.41 | This invention |
| G1 | PR122/PV19 | St/MAA | 1.39 | Comparative example |
| H1 | PR122 | D-1 | 1.20 | Comparative example |
| I1 | PV19 | D-1 | 1.21 | Comparative example |
| J1 | PR122 | Polymer compound 3 | 1.19 | Comparative example |
| K1 | PV19 | Polymer compound 3 | 1.20 | Comparative example |
| L1 | PY128/PY74 | St/MAA | 1.37 | Comparative example |
| M1 | PY128 | Polymer compound 3 | 1.19 | Comparative example |
| N1 | PY74 | Polymer compound 3 | 1.22 | Comparative example |
| O1 | PR122/PV19 | D-1 | 1.40 | This invention |

As it is obvious from the results of Table 4, it was found that the Ink Compositions A1 to F1 and O1 of the present invention have higher optical densities (print densities) in plain paper, and can provide high-quality printed articles, as compared with the Ink Compositions G1 to N1 of Comparative Examples.

(Measurement of light absorption spectrum)

The Ink Compositions A1, H1 and I1 prepared in Example 2 were diluted to 2000 times using ion-exchange water, and a visible-region light absorption spectrum of the dilution was measured using a cell having a light path length of 1 cm. The results are shown in Fig. 2.

As it is obvious from the results of Fig. 2, it was found that the Ink Composition A1 containing PR122 and PV19 of the present invention has higher absorption of light, which is related to color development of the printed article, even at the same pigment concentration, as compared with the Ink Compositions H1 and I1 containing any one kind of PR122 and PV19 alone. Therefore, it was found also from the results of Fig. 2 that the Ink Composition A1 of the present invention has a higher print density as compared with the Ink Compositions H1 and I1 of the Comparative Example, and can provide high-quality printed articles having excellent image vividness.

Example 5

(Measurement of X-ray diffraction)

The Pigment Dispersions A, H, I and O prepared in Example 1 were dried in vacuum (25°C), and thus dry pigment powders of colorants A3, H3, I3 and 03 were produced. These dry powders were subjected to X-ray diffraction measurement using RINT2500 (trade name) manufactured by Rigaku Corp. The X-ray diffraction measurement was carried out using a copper target and using Cu-K$\alpha$1 ray.

The respective crystallite diameters were calculated from the obtained spectra. The crystallite diameter of colorant particles for the dry pigment powder A3 was 14.8$\pm$2.0 nm (148$\pm$20 Å), while the crystallite diameters for the dry pigment powders H3 and I3 were 16.1$\pm$2.0 nm (161$\pm$20 Å) and 13.9$\pm$2.0 nm (139$\pm$20 Å), respectively. On the other hand, halo was observed at 2$\theta$ = 4° to 70° in the spectrum of the dry pigment powder 03.

From these results, it is considered that the colorant fine particles contained in the Pigment Dispersions A, H and I in the Examples have a crystalline structure. Furthermore, it can be considered that the spectrum of the dry pigment powder A3 differs in the peak positions from the spectra of the dry pigment powders H3 and I3, and forms a solid solution that is different from the dispersion which uses one kind of pigment only.

(Evaluation of light fastness)

Among the various printed articles produced in Example 4, the printed articles obtained using the inks A1, H1, I1 and O1 were set in a decoloration testing machine and were irradiated with a xenon lamp at an illuminance of 170,000 Lux for 4 days, to perform a test on light fastness. It was visually observed that the printed article obtained using the ink O1 which contains colorant particles with halo confirmed in the X-ray diffraction measurement showed slight decoloration as compared with the printed articles produced using other inks. It was also visually observed that the printed article produced using the ink A1 showed vivid color developing efficiency with high density, as compared with the printed articles produced using the inks H1 and I1, which contained one kind of pigment only.

Having described our invention as related to the present embodiments, it is our intention that the present invention not be limited by any of the details of the description, unless otherwise specified, but rather be construed broadly within its spirit and scope as set out in the accompanying claims.

This application claims priority on Patent Application No. 2009-084651 filed in Japan on March 31, 2009, which is entirely herein incorporated by reference.

## Claims

**1.** A water-insoluble colorant dispersion, comprising:

water;
a polymer having at least one repeating unit selected from the group of repeating units represented by the following formula (1) or (2); and
water-insoluble colorant particles, each of the particles containing at least two kinds of pigments;

Formula ( 1 )

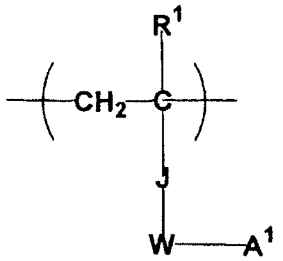

Formula ( 2 )

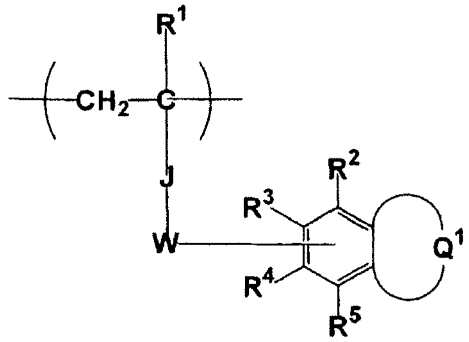

wherein, $R^1$ represents a hydrogen atom or a substituent; any one of $R^2$ to $R^5$ represents a single bond to bind to W, and the others each independently represent a hydrogen atom or a substituent; J represents -CO-, -COO-, $-CONR^{10}-$, -OCO-, or a methylene group, a phenylene group, or $-C_6H_4CO-$; $R^{10}$ represents a hydrogen atom, an alkyl group, an aryl group, or an aralkyl group; W represents a single bond or a divalent linking group; $A^1$ represents a heterocyclic group; $Q^1$ represents a group of atoms which is necessary for forming a ring together with a carbon atom.

2. The water-insoluble colorant dispersion according to claim 1, wherein the polymer further has a constitutional unit having at least one acid group as a hydrophilic portion.

3. The water-insoluble colorant dispersion according to claim 2, wherein the acid group is selected from the group of a carboxylic acid group, a sulfonic acid group, a hydroxyl group, and a phosphoric acid group.

4. The water-insoluble colorant dispersion according to any one of claims 1 to 3, wherein the water-insoluble colorant particle is a solid solution of containing the at least two kinds of pigments.

5. The water-insoluble colorant dispersion according to any one of claims 1 to 4, wherein the water-insoluble colorant particle has a crystalline structure.

6. The water-insoluble colorant dispersion according to any one of claims 1 to 5, wherein the average particle diameter of the water-insoluble colorant particle is 5 to 100 nm.

7. The water-insoluble colorant dispersion according to any one of claims 1 to 6, wherein the water-insoluble colorant particle is an organic pigment selected from the group consisting of quinacridone organic pigments, diketopyrrolopyrrole organic pigments, mono azo yellow organic pigments, condensed azo organic pigments, quinophthalone organic pigments, benzimidazolone organic pigments, and disazo yellow organic pigments.

8. The water-insoluble colorant dispersion according to any one of claims 1 to 7, wherein the water-insoluble colorant particle is a solid solution pigment containing two or more kinds of quinacridone compounds selected from the group consisting of unsubstituted quinacridone, 2,9-dimethylquinacridone, 2,9-dichloroquinacridone and 3,10-dichloroquinacridone.

9. The water-insoluble colorant dispersion according to any one of claims 1 to 8, wherein the repeating unit represented by the formula (2) is a repeating unit represented by the following formula (3):

Formula (3)

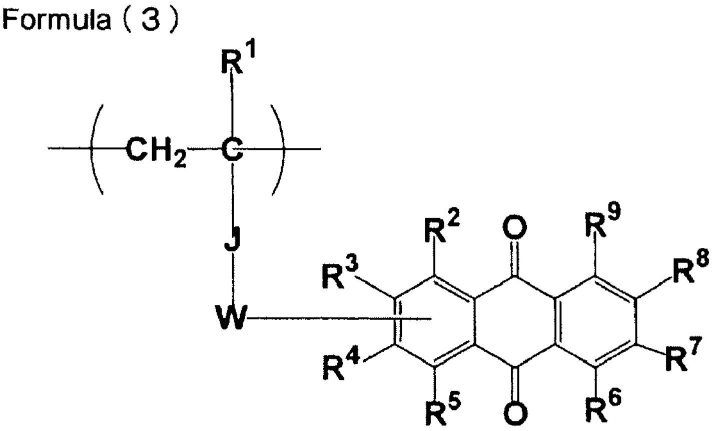

wherein, $R^1$ represents a hydrogen atom or a substituent; any one of $R^2$ to $R^5$ represents a single bond to bind to W, and the others each independently represent a hydrogen atom or a substituent; J represents -CO-, -COO-, -CONR$^{10}$-, -OCO-, or a methylene group, a phenylene group, or -$C_6H_4CO$-; $R^{10}$ represents a hydrogen atom, an alkyl group, an aryl group, or an aralkyl group; W represents a single bond or a divalent linking group; $R^6$ to $R^9$ each independently represents a hydrogen atom or a substituent.

**10.** A recording liquid produced by the water-insoluble colorant dispersion according to claim 1, comprising the water-insoluble colorant particles in an ink medium in an amount of 0.1 to 20 mass % with regard to the total mass weight of the recoding liquid.

**11.** A recording liquid particularly suitable for use in an inkjet, comprising the recoding liquid according to claim 10.

**12.** A method of producing a dispersion, comprising the steps of:

dissolving at least two kinds of water-insoluble colorants, a polymer, and a base into an aprotic water-soluble organic solvent, the polymer including at least repeating units of the following A and B as a hydrophilic portion,
A: a repeating unit of having an acid group selected from the group of a carboxylic acid group, a sulfonic acid group, a hydroxyl group, and a phosphoric acid group,
B: a repeating unit selected from the group of repeating units represented by the following formula (1) or (2); and bringing the solution prepared in the prescribed step into contact with an aqueous medium so as to form water-insoluble colorant fine particles.

Formula (1)

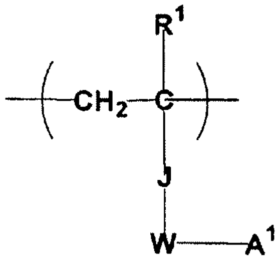

Formula (2)

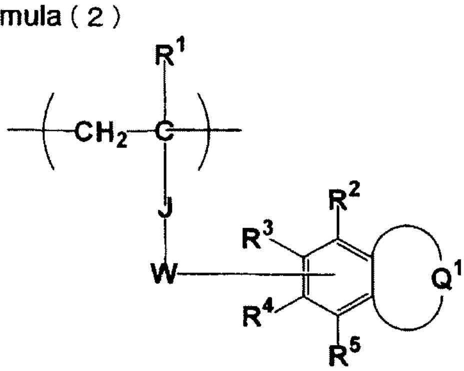

wherein, $R^1$ represents a hydrogen atom or a substituent; any one of $R^2$ to $R^5$ represents a single bond to bind to W, and the others each independently represent a hydrogen atom or a substituent; J represents -CO-, -COO-, -CONR$^{10}$-, -OCO-, or a methylene group, a phenylene group, or -$C_6H_4CO$-; $R^{10}$ represents a hydrogen atom, an alkyl group, an aryl group, or an aralkyl group; W represents a single bond or a divalent linking group; $A^1$ represents a heterocyclic group; $Q^1$ represents a group of atoms which is necessary for forming a ring together

with a carbon atom.

**13.** The method of producing a dispersion according to claim 12, further comprising a step of heat-treating the dispersion.

**14.** A water-insoluble colorant dispersion, obtained by the producing method according to claim 12 or 13.

**15.** A recording liquid produced by using the dispersion containing a water-insoluble colorant according to claim 14.

# Fig. 1

| Ink Compo-sition | Initial (fresh) | After a lapse of 14 days at 60°C | Remarks |
|---|---|---|---|
| A2 | 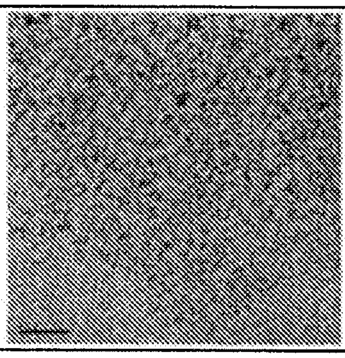 | 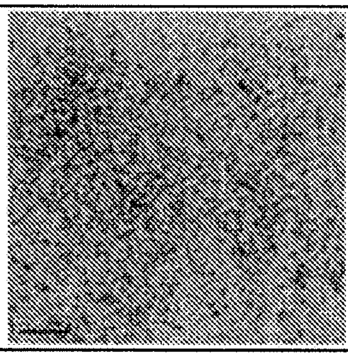 | This invention |
| H2 | 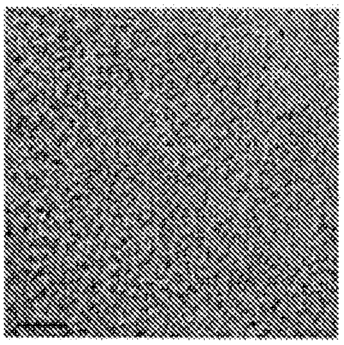 | 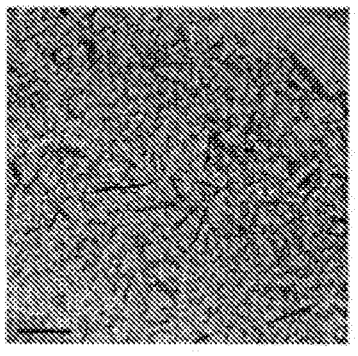 | Comparative example |

***Fig. 2***

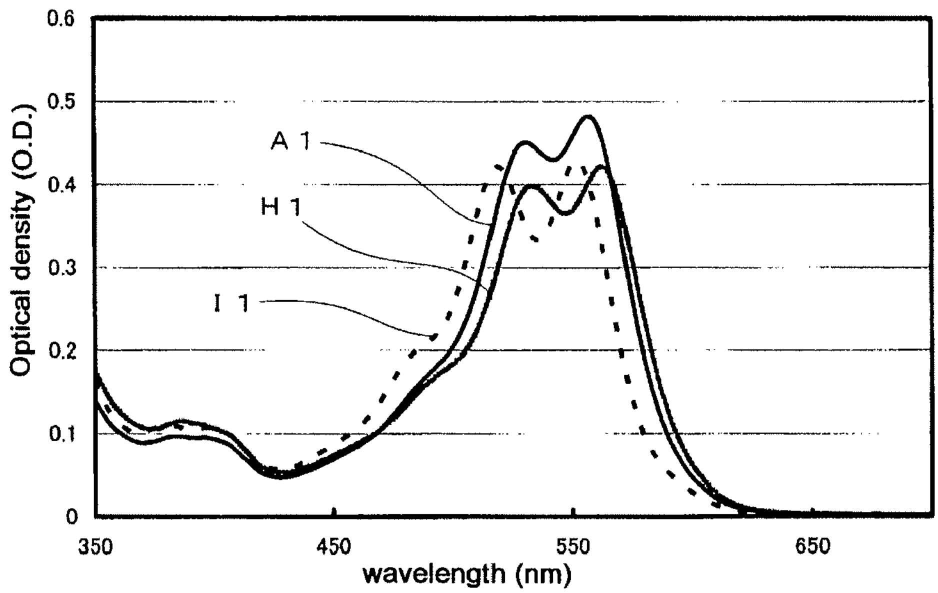
0.6
0.5
0.4
0.3
0.2
0.1
0
Optical density (O.D.)
A 1
H 1
I 1
350
450
550
650
wavelength (nm)

Europäisches Patentamt
European Patent Office
Office européen des brevets

# EUROPEAN SEARCH REPORT

Application Number
EP 10 15 8382

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/006639 A2 (AGFA GEVAERT [BE]; LOCCUFIER JOHAN [BE]; JAUNKY WOJCIECH [BE]; DEROOVE) 18 January 2007 (2007-01-18) * paragraph [0106]; claims; examples; tables * | 1-15 | INV. C09D11/00 C09D11/10 C09D17/00 |
| X | EP 0 763 580 A2 (TOYO INK MFG CO [JP]) 19 March 1997 (1997-03-19) * claims; examples * | 1-15 | |
| X,P | EP 2 090 625 A2 (FUJIFILM CORP [JP]) 19 August 2009 (2009-08-19) * paragraphs [0050], [ 0020], [ 0069]; claims; examples * | 1-15 | |
| X,P | EP 2 110 416 A2 (FUJIFILM CORP [JP]) 21 October 2009 (2009-10-21) * paragraphs [0056], [ 0060]; claims; examples * | 1-15 | |

TECHNICAL FIELDS SEARCHED (IPC)

C09D

The present search report has been drawn up for all claims

1

| Place of search | Date of completion of the search | Examiner |
|---|---|---|
| Munich | 25 June 2010 | Schmitz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 10 15 8382

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2010

| Patent document cited in search report | Publication date | Patent family member(s) | Publication date |
|---|---|---|---|
| WO 2007006639 A2 | 18-01-2007 | JP 2009501253 T | 15-01-2009 |
| | | US 2008227894 A1 | 18-09-2008 |
| EP 0763580 A2 | 19-03-1997 | DE 69629426 D1 | 18-09-2003 |
| | | DE 69629426 T2 | 08-07-2004 |
| | | US 5854323 A | 29-12-1998 |
| EP 2090625 A2 | 19-08-2009 | CN 101508859 A | 19-08-2009 |
| | | JP 2009191133 A | 27-08-2009 |
| | | US 2009203833 A1 | 13-08-2009 |
| EP 2110416 A2 | 21-10-2009 | JP 2009256595 A | 05-11-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004043776 A
- JP 4152820 B
- JP 2004002715 A
- JP 2004231692 A
- JP 2007186697 A
- JP 2006 A
- JP 274020 A
- JP 2007009117 A
- JP 60035055 A
- WO 2006121018 A
- JP 2005307154 A
- JP 2007039643 A
- JP 3936558 B
- JP 2009084651 A


### Non-patent literature cited in the description


- **Hirotaka Iijima ; Kenichi Okubo ; Kunitsuna Sasaki.** *Konica Minolta Technology Report,* 2007, vol. 4
- **R. F. Fedors.** *Polymer Engineering Science,* 1967, vol. 14, 147